(19) Europäisches Patentamt / European Patent Office / Office européen des brevets

(11) **EP 4 597 300 A1**

(12) **EUROPEAN PATENT APPLICATION**

(43) Date of publication:
06.08.2025 Bulletin 2025/32

(21) Application number: 24305167.9

(22) Date of filing: 31.01.2024

(51) International Patent Classification (IPC):
*G06F 7/544* (2006.01)  *G06N 10/40* (2022.01)

(52) Cooperative Patent Classification (CPC):
G06F 7/544; G06N 10/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **BULL SAS**
**78340 Les Clayes-Sous-Bois (FR)**

(72) Inventor: **REMAUD, MAXIME**
**78370 PLAISIR (FR)**

(74) Representative: **Plasseraud IP**
**104 Rue de Richelieu**
**CS92104**
**75080 Paris Cedex 02 (FR)**

(54) **DATA PROCESSING METHOD AND APPARATUSES FOR IMPLEMENTING THE SAME**

(57) A data processing method for use on a quantum computational device is proposed, which comprises, for a first n-bit element $(a_i)_{i=0,\ldots,n-1}$ and a second n-bit element $(b_i)_{i=0,\ldots,n-1}$ comprised in input data to be processed, performing a carry computing phase for computing a (n+1)-bit carry element $(c_i)_{i=0,\ldots,n}$ of carries for computing a sum of the first element $(a_i)_{i=0,\ldots,n-1}$ and the second element $(b_i)_{i=0,\ldots,n-1}$, which comprises: sequentially applying, for the sequence index $i$ from 0 to $n-1$, a first Peres gate operation on $\widetilde{a_{i-1}}$ and $\widetilde{b_i}$ to $\widetilde{a_i}$ for computing the carry bit $c_i$ of the carry element $(c_i)_{i=0,\ldots,n}$, wherein $\widetilde{b_i}$ is a result of a first controlled-NOT gate operation applied to a i-th bit $b_i$ of the second element using a i-th bit $a_i$ of the first element as control element, wherein $\widetilde{a_{i-1}}$ is a result of a second controlled-NOT gate operation applied to a bit $a_{i-1}$ of the first element using the i-th bit $a_i$ of the first element as control element, and wherein $a_{-1}$ corresponds to $c_0$ and is predefined.

FIG. 2a

FIG. 2b

EP 4 597 300 A1

**Description**

The present subject disclosure relates to the field of quantum computing, in particular to a quantum ripple-carry adder for a quantum computer.

In the field of quantum computing, a quantum computing program, that is, a program that is executable on a quantum computer, can be generated from a quantum circuit that corresponds to the program. Quantum circuit synthesis corresponds to the decomposition of a unitary operator that corresponds to a quantum circuit into a sequence of quantum gates.

Addition is the most elementary of arithmetic operations. It is required for multiplication, averaging and even more complex algorithms, such as for example complex quantum cryptanalytic algorithms (e.g. the Shor or Kuperberg algorithms). In a quantum computer, as in a classical (non-quantum) computer, the design of an addition algorithm with good performances is therefore essential.

Various conventional approaches have been investigated for computing the sum of two n-bit numbers representing qubits to be added, in an effort to bring down the computational cost of implementing addition, whether measured in terms of ancillary qubits, quantum cost or delay.

There is nevertheless a need for an improved data processing method for computing the sum of two n-bit numbers representing qubits to be added that addresses the drawbacks and shortcomings, or improves the performances of the conventional technology in the art.

In particular, it is an object of the present subject disclosure to provide an improved data processing method for execution on a quantum computational device that addresses the drawbacks and shortcomings of the conventional technology in the art.

Another object of the present subject disclosure is to provide a data processing method suitable for computation of a sum of qubits using a quantum computer with improved quantum computational cost efficiency.

Yet another object of the present subject disclosure is to provide a data processing method suitable for computation of a sum of qubits using a quantum computer with improved quantum computational delay efficiency.

To achieve these objects and other advantages and in accordance with the purpose of the present subject disclosure, as embodied and broadly described herein, in one aspect of the present subject disclosure, a data processing method for use on a quantum computational device is proposed.

The proposed method may comprise, for a first n-bit element $(a_i)_{i=0,...,n-1}$ and a second n-bit element $(b_i)_{i=0,...,n-1}$ comprised in input data to be processed, a carry computing phase for computing a (n+1)-bit carry element $(c_i)_{i=0,...,n}$ of carries for computing a sum of the first element $(a_i)_{i=0,...,n-1}$ and the second element $(b_i)_{i=0,...,n-1}$, which comprises:

Sequentially apply, for the sequence index $i$ from 0 to n - 1, a first Peres gate operation on $\widetilde{a_{i-1}}$ and $\widetilde{b_i}$ to $\widetilde{a_i}$ for computing the carry bit $c_i$ of the carry element $(c_i)_{i=0,...,n}$, wherein $\widetilde{b_i}$ is a result of a first controlled-NOT gate operation applied to a bit $b_i$ of the second element using a bit $a_i$ of the first element as control element, and wherein $\widetilde{a_{i-1}}$ is a result of a second controlled-NOT gate operation applied to a bit $a_{i-1}$ of the first element using a bit $a_i$ of the first element as control element, wherein $a_{-1}$ corresponds to $c_0$ and is predefined (e.g. to 0).

In some embodiments, the carry computing phase may further comprise: Applying a first controlled-NOT gate operation to (data held/stored in a corresponding bit position of) each i-th bit $a_i$ of the first element used as control bit and (data held/stored in a corresponding bit position of) each i-th bit $b_i$ of the second element used as target bit.

In some embodiments, the carry computing phase may further comprise, further to applying the first controlled-NOT gate operation: Sequentially applying, for a sequence index $i$ from 0 to $n$ - 1, a second controlled-NOT gate operation to (data held/stored in a corresponding bit position of a corresponding bit position of) the i-th bit $a_i$ of the first element used as control bit and (data held/stored in a corresponding bit position of a corresponding bit position of) the (i-1)-th bit $a_{i-1}$ of the first element a used as target bit, wherein $a_{-1}$ corresponds to $c_0$ and is predefined (for example to 0).

In some embodiments, the carry computing phase may further comprise, further to applying the first Peres gate operation: Applying a third controlled-NOT gate operation to (data held/stored in a corresponding bit position of a corresponding bit position of) each i-th bit $a_{i-1}$ of the first element used as control bit and (data held/stored in a corresponding bit position of a corresponding bit position of) each i-th bit $b_i$ of the second element used as result bit, wherein (the element denoted) $a_{-1}$ corresponds to bit $c_0$ and is predefined (for example to 0). In some embodiments, an ancillary bit z may be used as target bit to store the (n+1)-th carry bit $c_n$.

In some embodiments, the proposed data processing method may further comprise a sum computation phase performed after the carry computation phase for computing a (n+1)-bit sum element $(s_i)_{i=0,...,n}$ of a result of the computation of the sum of the first element $(a_i)_{i=0,...,n-1}$ and the second element $(b_i)_{i=0,...,n-1}$. In some embodiments, the sum computation phase may comprise: Sequentially applying, for the sequence index $i$ from 0 to n - 1, a second Peres gate operation on (data held/stored in a corresponding bit position of a corresponding bit position of)

$$\widetilde{a_{n-i-1}}$$

and (data held/stored in a corresponding bit position of a corresponding bit position of)

$$\widetilde{b_{n-i}}.$$

to (data held/stored in a corresponding bit position of a corresponding bit position of)

$$\widetilde{a_{n-i}}$$

for computing the sum bit $s_{n-i}$ of the sum element $(s_i)_{i=0,\ldots,n}$, wherein (data held/stored in a corresponding bit position of a corresponding bit position of) the bits

$$\widetilde{a_{n-i-1}},\ \widetilde{a_{n-i}},$$

and

$$\widetilde{b_{n-i}}$$

are the results of the carry computation phase applied to the bits of the first and second elements, respectively.

In some embodiments, the proposed data processing method may further comprise: Further to sequentially applying the second Peres gate operation, sequentially applying, for a sequence index $i$ from 0 to $n$ - 1, a fourth controlled-NOT gate operation to (data held/stored in a corresponding bit position of a corresponding bit position of) a (i-1)-th bit $a_{i-1}$ of the first element used as control bit, and (data held/stored in a corresponding bit position of) an i-th bit $a_i$ of the first element used as result bit. The element denoted $a_{-1}$ may correspond to the 0-th bit $c_0$ of the carry element, and may be predefined (for example to 0).

In some embodiments, the proposed data processing method may further comprise: Further to sequentially applying the fourth controlled-NOT gate operation, applying a fifth controlled-NOT gate operation to (data held/stored in a corresponding bit position of) each i-th bit $a_i$ position of the first element used as control bit and (data held/stored in a corresponding bit position of) each i-th bit $b_i$ position of the second element used as target bit.

In some embodiments, the carry computing phase may further comprise, further to applying the first Peres gate operation: Applying a sixth controlled-NOT gate operation to (data held/stored in a corresponding bit position of) the n-th bit $a_{n-1}$ of the first element used as control bit (and an ancillary bit $z$ used as result bit to store the (n+1)-th carry bit $c_n$).

In some embodiments, the proposed data processing method may further comprise a sum computation phase performed after the carry computation phase for computing a (n+1)-bit sum element $(s_i)_{i=0,\ldots,n}$ of a result of the computation of the sum of the first element $(a_i)_{i=0,\ldots,n-1}$ and the second element $(b_i)_{i=0,\ldots,n-1}$. The sum computation phase may comprise: Sequentially applying, for the sequence index $i$ from $n$ - 1 to 0, the following operations: a conjugate transpose Peres gate operation on (data held/stored in a corresponding bit position of)

$$\widetilde{a_{n-i-1}}$$

and (data held/stored in a corresponding bit position of)

$$\widetilde{b_{n-i}}$$

to (data held/stored in a corresponding bit position of)

$$\widetilde{a_{n-i}}.$$

for computing the sum bit $s_{n-i}$ of the sum element $(s_i)_{i=0,...,n}$, wherein (data held/stored in a corresponding bit position of) the bits

$$\widetilde{a_{n-i-1}}, \widetilde{a_{n-i}},$$

and

$$\widetilde{b_{n-i}}$$

are the results of the carry computation phase applied to the bits of the first and second elements, respectively; Further to applying the conjugate transpose Peres gate operation, apply a seventh controlled-NOT gate operation to (data held/stored in a corresponding bit position of) the (n-i-1)-th bit $a_{n-i-1}$ of the first element used as control bit and (data held/stored in a corresponding bit position of) the (n-i-2)-th bit $a_{n-i-2}$ of the first element used as target bit; and further to applying the seventh controlled-NOT gate operation, apply an eighth controlled-NOT gate operation to (data held/stored in a corresponding bit position of) the (n-i-2)-th bit $a_{n-i-2}$ of the first element used as control bit and (data held/stored in a corresponding bit position of) the (n-i-1)-th bit $b_{n-i-1}$ of the second element used as result bit. $a_{-1}$ may correspond to $c_0$ and may be predefined (for example to 0).

In some embodiments, the first and second elements may represent a first and second qubits, respectively.

According to another aspect, a non-quantum computational device is proposed, which comprises a processor and a memory operatively coupled to the processor, wherein the device is configured to perform embodiments of a method proposed in the present subject disclosure.

According to yet another aspect, a quantum computational device is proposed, which comprises a quantum processor and a (quantum) memory operatively coupled to the quantum processor, wherein the device is configured to perform embodiments of a method proposed in the present subject disclosure.

According to yet another aspect, a quantum computational device is proposed, which is configured to perform embodiments of a method proposed in the present subject disclosure.

According to yet another aspect, a computer program product comprising computer program code tangibly embodied in a computer readable medium is proposed, said computer program code comprising instructions to, when provided to a computer system and executed, cause said computer to perform embodiments of a method proposed in the present subject disclosure.

According to yet another aspect, a computer program product comprising computer program code tangibly embodied in a computer readable medium is proposed, said computer program code comprising instructions to, when provided to a non-quantum computer system and executed, cause said computer to perform embodiments of a method proposed in the present subject disclosure.

According to yet another aspect, a data set representing, for example through compression or encoding, a proposed computer program product is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figure 1a is an exemplary block diagram illustrating a quantum NOT gate;
Figure 1b is an exemplary block diagram illustrating a quantum CNOT gate;
Figures 1c and 1d are exemplary block diagrams illustrating a quantum Peres gate;
Figures 1e and 1f are exemplary block diagrams illustrating a quantum conjugate transpose Peres gate;
Figure 2a is a block diagram illustrating an exemplary routine for computing carries in accordance with one or more embodiments;
Figure 2b is a flow chart illustrating an exemplary data processing method, in accordance with one or more embodiments;
Figure 3a is a block diagram illustrating an exemplary first Peres quantum gate operation that may be used in accordance with one or more embodiments;

Figure 3b is a block diagram illustrating an exemplary first CNOT quantum gate operation that may be used in accordance with one or more embodiments;

Figure 3c is a block diagram illustrating an exemplary second CNOT quantum gate operation that may be used in accordance with one or more embodiments;

Figure 3d is a block diagram illustrating an exemplary routine for uncomputing carries and computing a sum that may be used in accordance with one or more embodiments;

Figure 3e is a block diagram illustrating an exemplary routine for uncomputing carries and computing a sum that may be used in accordance with one or more embodiments;

Figure 4a illustrates an exemplary algorithm for an exemplary carry computation phase in accordance with one or more embodiments;

Figure 4b illustrates a carry computation part of an exemplary quantum adder circuit in accordance with one or more embodiments;

Figure 5a illustrates an exemplary algorithm for an exemplary carry computation phase in accordance with one or more embodiments;

Figure 5b illustrates a carry computation part of an exemplary adder circuit in accordance with one or more embodiments;

Figure 5c illustrates an exemplary quantum adder algorithm in accordance with one or more embodiments;

Figure 5d illustrates an exemplary quantum adder circuit in accordance with one or more embodiments;

Figure 5e illustrates an exemplary quantum adder circuit in accordance with one or more embodiments;

Figure 6a illustrates an exemplary algorithm for a carry computation phase in accordance with one or more embodiments;

Figure 6b illustrates a carry computation part of an exemplary adder circuit in accordance with one or more embodiments;

Figure 6c illustrates an exemplary quantum adder algorithm in accordance with one or more embodiments;

Figure 6d illustrates an exemplary quantum adder circuit in accordance with one or more embodiments;

Figure 6e illustrates an exemplary quantum adder circuit in accordance with one or more embodiments;

Figure 7 illustrates an exemplary quantum comparator circuit in accordance with one or more embodiments;

Figure 8 illustrates an exemplary architecture of a quantum computational device in accordance with one or more embodiments.

## Description of embodiments

The advantages, and other features of the components disclosed herein, will become more readily apparent to those having ordinary skill in the art form. The following detailed description of certain preferred embodiments, taken in conjunction with the drawings, sets forth representative embodiments of the subject technology, wherein like reference numerals identify similar structural elements.

For simplicity and clarity of illustration, the drawing figures illustrate the general manner of construction, and descriptions and details of well-known features and techniques may be omitted to avoid unnecessarily obscuring the discussion of the described embodiments of the subject disclosure. Additionally, elements in the drawing figures are not necessarily drawn to scale. For example, the dimensions of some of the elements in the figures may be exaggerated relative to other elements to help improve understanding of embodiments of the present subject disclosure. Certain figures may be shown in an idealized fashion in order to aid understanding, such as when structures are shown having straight lines, sharp angles, and/or parallel planes or the like that under real-world conditions would likely be significantly less symmetric and orderly.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose non quantum computer, special purpose non quantum computer or other programmable data processing apparatus to produce a machine, such that the computer program instructions or software code which execute on the non quantum computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, Solid State Drive (SSD) devices or Hard Disk Drive (HDD) devices, or any other suitable medium from that can be used to carry or store program code in the form of instructions or data structures which can be read by a computer processor. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, PHP, Java, Javascript, Python, and bash scripting.

Unless specifically stated otherwise, it will be appreciated that throughout the following description discussions utilizing terms such as processing, computing, calculating, determining, generating, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" as used herein means serving as an example, instance, or illustration. Any aspect or design described herein as "exemplary" is not necessarily to be construed as preferred or advantageous over other aspects or designs.

As used herein, the notation "$|0\rangle$" designates the quantum state "ket-zero", and the notation "$|1\rangle$" designates the quantum state "ket-one", that may each be used as an initial quantum state in a quantum circuit.

As used herein, the terms "qubit", "qu-bit", and "qbit" may be used interchangeably to refer to a quantum bit in the context of quantum computing, which corresponds to a two-state quantum-mechanical system, such as, for example, the spin of an electron (spin-up or spin-down), the polarization of a photon (left-handed or righ-handed circular polarization). A qubit may be in a coherent superposition of multiple states simultaneously. Quantum data may comprise one or more qubits or a vector of qubits.

The terms "quantum" or « quantum computing » as used in the present subject disclosure are intended to cover any computer, computing system, processing or computing operation, configured to use or exploit quantum mechanical phenomena. A computer, processor, calculator, computing system, computing node, computing task, computer job, processing, algorithm, and processing resource configured to use or exploit quantum mechanical phenomena will be referred to herein as "quantum" (a quantum computer, quantum processor, quantum calculator, quantum computing system, quantum computing node, quantum computing task, quantum computer job, quantum processing, quantum algorithm, and quantum processing resource, respectively. In contrast, a computer, processor, calculator, computing system, computing node, computing task, computer job, processing, algorithm, and processing resource which is not configured to use or exploit quantum mechanical phenomena may be referred to herein as "classical" or "non-quantum" (a classical computer, classical processor, classical calculator, classical computing system, classical computing system, classical computing node, classical computing task, classical computer job, classical algorithm, classical processing, classical processing resource, respectively). A quantum processor (also referred to herein as a quantum processing unit (or QPU)) may be configured to perform both quantum processing and classical processing.

The term « hybrid » as used in the present subject disclosure, for example as applied to a computer, an algorithm, a computer task, a computer job, refers to the combination of classical and quantum.

The present subject disclosure may advantageously be implemented on any suitable computing environment, such as, for example, comprising a hybrid computer configured with one or more classical resources (e.g. one or more CPUs) and one or more quantum processing resources (e.g. one or more QPUs), such as a hybrid HPC cluster, an electronic component, an electronic chipset, a QPU, an electronic circuitboard, an electronic circuit, a quantum processing chipset, a quantum computer, etc.

In quantum computing, a computing operation may be described by its result modeled in the form of a target quantum state (denoted $|\psi_{target}\rangle$). Obtaining a direct description of such target quantum state is typically not considered for achieving this state, as describing the target quantum state as a complex vector is inherently inefficient as it comes at an exponential computational cost.

For this reason, another approach for preparing a target quantum state focuses on a quantum circuit capable of preparing the desired target quantum state. The quantum circuit may be described as the decomposition of a unitary operator U (that corresponds to the quantum circuit) into a sequence of one or more quantum gates $U_1, ..., U_n$, and operating on an initial quantum state (e.g. $|0\rangle$) comprising one or two qubits. Therefore the target quantum state may be described as the output of the quantum circuit operating on the initial quantum state, for example according to the following equation:

$$|\psi_{target}\rangle = U_n \cdots U_1 |0\rangle$$

The proposed scheme may advantageously be implemented in any computing environment comprising quantum computational device configured according to one or more embodiments of the present subject disclosure, such as, for example a quantum processor or a quantum processing unit configured with one or more quantum gates.

As used herein, the terms "quantum gate", "quantum logic gate", or "gate" may be used interchangeably to refer to an operator which performs an operation on input data suitable for representing one or more qubits.

In the present subject disclosure, the term "apply" or its derivatives may be used, in particular with respect to a quantum gate operation and input data, to refer to the performing the quantum gate operation on the input data.

For technical reasons, the majority of today's quantum computers can only implement gates acting on 1 or 2 qubits.

When considering the complexity of implementing a circuit on a quantum computer, several questions arise, among which the question of which gates may be used to implement the circuit. In one or more embodiments, a decomposition of the proposed circuit into 1- or 2-qubit gates, may be considered for purposes of comparison between different technologies (for implementing the gates, e.g. using photons, ions), but also for practical reasons: In some embodiments, quantum computers used for implementing embodiments of the present subject disclosure may be configured to only use these elementary gates. In one or more embodiments, a set of quantum gates into which any other gate can be decomposed may be chosen, and performance metrics may be defined to evaluate the performance of an implementation.

Because any quantum gate acting on any number of qubits may be decomposed in a combination of one or more of 1-qubit gate and 2-qubit gate, the set of the 1-qubit and 2-qubit gates is sometimes referred to as a universal gate set. In some embodiments, a set of quantum gates that is approximately universal, that is, a set of quantum gates that typically comprise a limited number of gates that are sufficient to approximate any quantum gate to any desired precision, may advantageously be used to build the quantum gates used in embodiments of the present subject disclosure.

Different (approximate) universal sets of quantum gates may be used for generating a quantum circuit.

For example, a set of quantum gates comprising gates of a Clifford set ({CNOT, *Hadamard, S*}) and a T gate, which can advantageously be used in fault-tolerant quantum circuit design, may be used. A Clifford gate is a gate of the Clifford group, which is a set of mathematical transformations which represent a set of quantum operations which normalize the n-qubit Pauli group by mapping the set of n-fold Pauli group into itself. Gates of the Clifford group may be generated by three gates: the Hadamard gate, the phase gate S, and the CNOT gate. A T gate is a phase shift gate (operating a phase shift $\varphi = \dfrac{\pi}{4}$ ) which may be represented by the following transformation matrix:

$$T = \begin{bmatrix} 1 & 0 \\ 0 & e^{i\varphi} \end{bmatrix} \text{ with } \varphi = \frac{\pi}{4}.$$

A Hadamard gate operates to map the states $|0\rangle$ and $|1\rangle$ to $\dfrac{|0\rangle+|1\rangle}{\sqrt{2}}$ and $\dfrac{|0\rangle-|1\rangle}{\sqrt{2}}$, respectively, and can be represented by a Hadamard matrix:

$$H = \frac{1}{\sqrt{2}} \begin{bmatrix} 1 & 1 \\ 1 & -1 \end{bmatrix}$$

As another example, a set of quantum gates comprising the set {*NOT, CNOT, Ctrl - V, Ctrl - V†*} in which (optimal or near optimal) implementations of some important gates acting on three qubits can advantageously be designed, may be used. The *Crtl - V* and *Ctrl - V†* gates are 2-qubit reversible gates also known as the controlled square-root NOT gate and the controlled conjugate transpose square-root NOT gate, respectively.

A V gate operates on one qubit, and can be represented by the following matrix:

$$\sqrt{NOT} = \frac{1}{2}\begin{bmatrix} 1+i & 1-i \\ 1-i & 1+i \end{bmatrix}$$

A $V^\dagger$ gate (conjugate transpose V gate) also operates on one qubit, and can be represented by the following matrix:

$$\sqrt{NOT}^{\ \dagger} = \frac{1}{2}\begin{bmatrix} 1-i & 1+i \\ 1+i & 1-i \end{bmatrix}$$

A *Ctrl - V* gate is a Controlled V gate which operates on 2 qubits (a control qubit and a target qubit), and a *Ctrl -$V^\dagger$* gate is a controlled $V^\dagger$ gate which also operates on 2 qubits (a control qubit and a target qubit).

The resulting complexity of the quantum circuits proposed in the present subject disclosure according to embodiments directly depends on the gate set used for implementing the circuit (even though the Solovay-Kitaev theorem establishes a close connection between the complexities obtained with different universal gate sets).

Three main metrics can be used for purposes of assessing the complexity of a quantum circuit.

A first metric relates to the (quantum) width of the circuit, which corresponds to the number of qubits required to implement the circuit. While some qubits are necessary to the circuit as they are used in the one or more operations performed by the circuit, other qubits - sometimes referred to as "ancillary" - may typically be used as temporary computation space.

A second metric that may be used relates to the (quantum) cost, which corresponds to the number of gates in the circuit (as expressed in the form of a combination of 1-qubit and 2-qubit gates only (noting that any n-qubit gate with n > 2 can be decomposed into a combination of 1-qubit and 2-qubit gates)).

A third metric relates to the (quantum) delay, which corresponds to the depth of the circuit when it is expressed only with 1-qubit and 2-qubit gates. The quantum delay may be seen as providing information on how long the circuit will take to accomplish its task.

It is therefore desirable for a given quantum circuit to reduce (and possibly to minimize) one or more of the number of ancillary qubits, the quantum cost and the quantum delay, to obtain better performances of the circuit with fewer resources.

Different quantum gates may be used in a quantum circuit as elementary quantum circuits operating on a given number of qubits. As they are the building blocks of a quantum circuit, 1 -qubit and 2-qubit gates are considered to have a size / quantum cost of 1, and a depth / delay of 1 (the delay of execution of an elementary gate, that is, a 1 qubit or 2-qubit gate, may sometimes be denoted $\Delta$ in the present subject disclosure). In some embodiments, 3-qubit gates such as the Toffoli gate, Fredkin gate and Peres gate may be considered for designing arithmetic circuits. Depending on the embodiment, these 3-qubit gates may be implemented using any suitable (approximate) universal gate sets, such as the exemplary approximate universal gate sets described above.

In contrast to logic gates (used in non-quantum computational devices), quantum gates are typically designed to be reversible, so that any quantum circuit corresponding to a sequence of one or more quantum gates can itself be reversible.

Controlled quantum gates are gates that operate on two or more qubits, wherein one or more qubits operate to control operations of the gate.

Reference may be made in the present subject-disclosure to the following quantum gates:

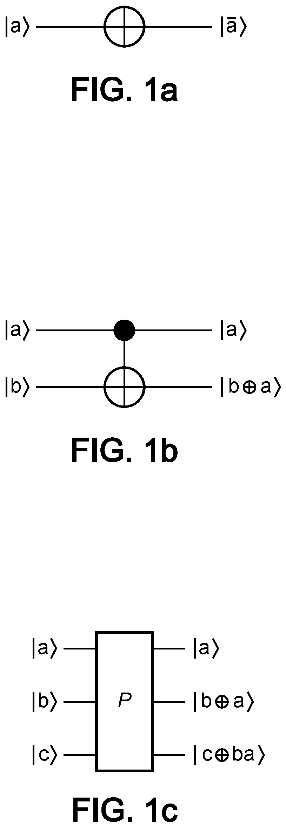

Fig. 1a shows a diagram representing a quantum NOT gate.

A quantum NOT gate (also referred to as "Pauli-X gate") performs a NOT operation on quantum data comprising an input qubit. The NOT operation corresponds to a XOR logical operation for a logic gate: the output qubit is 11) for an input qubit of 10), and the output qubit is 10) for an input qubit of 11).

With respect to an input qubit $|a\rangle$, the binary complement of $|a\rangle$ that is the output qubit of a quantum NOT gate applied to $|a\rangle$ may be denoted $|\overline{a}\rangle$ or $|a \oplus 1\rangle$.

A quantum NOT gate may be represented by a Pauli matrix Z:

$$X = \begin{bmatrix} 0 & 1 \\ 1 & 0 \end{bmatrix}$$

Fig. 1b shows a diagram representing a quantum Controlled-NOT gate.

The Controlled-NOT gate (which may be referred herein to as a "CNOT" gate) is a controlled quantum gate which performs a NOT operation on input quantum data comprising a first input qubit depending on a second input qubit (which may be referred to as the "control bit").

For example, as illustrated on Fig. 1b, a quantum CNOT gate may be configured to perform a NOT operation on the first input bit (to operate as a quantum NOT gate on the first input bit) under the condition that the second input qubit is 11), and to otherwise leave the first input bit unchanged. The output qubit resulting from the performance or not of the NOT gate operation on the first input bit, under the control of the control bit, may be indifferently referred to as the "result" bit or the "target" bit.

A quantum CNOT gate may be represented by the following matrix *cX:*

$$cX = \begin{bmatrix} 1 & 0 & 0 & 0 \\ 0 & 1 & 0 & 0 \\ 0 & 0 & 0 & 1 \\ 0 & 0 & 1 & 0 \end{bmatrix}$$

In the present subject disclosure, a quantum CNOT gate which performs a CNOT gate operation on quantum input data comprising a first qubit $|a\rangle$ and a second qubit $|b\rangle$ may sometimes be denoted $CNOT(|a,b\rangle)$. The operation of a CNOT gate may be represented as mapping the input qubits $|a, b\rangle$ to $|a, b \oplus a\rangle$:

$$|a, b\rangle \longmapsto |a, b \oplus a\rangle$$

where $\oplus$ represents a logical XOR operation.

The qubit on which the XOR is applied (or not) may be referred as the "target" qubit, whereas the qubit controlling the CNOT gate may be referred to as the "control" qubit.

With respect to an input qubit $|b\rangle$, the output target qubit of a quantum CNOT gate applied to $|b\rangle$ under the control qubit $|a\rangle$ may be denoted $|b \oplus a\rangle$.

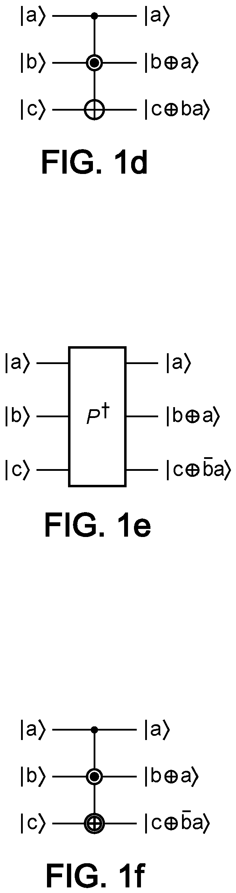

Fig. 1c and 1d show a diagram representing a quantum Peres gate.

A quantum Peres gate is an operator that performs a quantum operation on three qubits.

The operation of a Peres gate may be represented as mapping the input qubits $|a, b, c)$ to $|a, b \oplus a, c \oplus ab\rangle$:

$$|a, b, c\rangle \longmapsto |a, b \oplus a, c \oplus ab\rangle$$

where $\oplus$ represents a logical XOR operation.

In the present subject disclosure, a quantum Peres gate which performs a Peres gate operation on quantum input data comprising qubits *a, b,* and c may sometimes be denoted $Peres(|a, b, c\rangle)$.

Fig. 1e and 1f show a diagram representing a quantum conjugate transpose Peres gate.

A quantum (Hermitian) conjugate transpose (also called "adjoint") Peres gate is also an operator that performs a quantum operation on three qubits.

The operation of a Peres gate may be represented as mapping the input qubits $|a, b, c)$ to $|a, b \oplus a, c \oplus a\overline{b}\rangle$:

$$|a, b, c\rangle \longmapsto |a, b \oplus a, c \oplus a\overline{b}\rangle$$

where $\oplus$ represents a logical XOR operation, and $\overline{b}$ represents a binary complement of b.

In the present subject disclosure, a quantum Peres gate which performs a Peres gate operation on quantum input data comprising qubits *a, b,* and c may sometimes be denoted $Peres^{\dagger}(|a, b, c\rangle)$.

In one or more embodiments, one considers two numbers denoted *a* and b, and their respective exemplary n-bit binary expansion $(a_{n-1}, ..., a_0)$ and $(b_{n-1}, ..., b_0)$. Depending on the embodiment, the $(n - 1)$ -th bit may correspond to the most significant bit (MSB), or to the least significant one (LSB).

In the following, the proposed data processing scheme will be described in a case where the (n-1)-th bit of a n-bit binary expansion of a number correspond to the most significant bit of the n-bit binary expansion of the number. However, it will be appreciated by those having ordinary skill in the relevant art that the proposed scheme may be implemented in some embodiments using a different LSB/MSB definition from the above case, which is given by way of example only.

For example, *a* and *b* may be two integers to be processed (e.g., depending on the embodiment, added or compared), with respective binary representations $(a_{n-1}, ..., a_0)$ and $(b_{n-1}, ..., b_0)$ corresponding to $a = \sum_{i=0}^{n-1} a_i 2^i$ and $b = \sum_{i=0}^{n-1} b_i 2^i$.

With respect to the context of quantum computing, in the present subject disclosure, the following notations may be used: *a* and *b* may respectively correspond to two integers, which may have a n-bit binary representation, $|a\rangle$ and $|b\rangle$

may respectively represent two n-qubit (quantum memory) registers respectively containing $a$ and $b$, $a_i$ and $b_i$ may respectively represent bits of the respective n-bit binary representation of $a$ and $b$, and $a_i\rangle$ and $|b_i\rangle$ may respectively represent two 1-qubit (quantum memory) registers respectively containing bits $a_i$ and $b_i$.

In one or more embodiments, the two numbers $a$ and $b$ may be obtained as input data for use in a proposed scheme, and may be stored in a memory. For example, in some embodiments, the data $a_i$ and $b_i$ of the binary representation of the input data $a$ and b may be obtained, and stored in one or more quantum memory registers.

In the present subject disclosure, data contained in a memory register that initially contains the i-th bit $a_i$ (representing the i-th qubit $|a_i\rangle$) may be indifferently referred to as the i-th location, memory location, or bit position of the input data element $a$, and may be denoted $A_i$, $\tilde{a}_i$, or $\breve{a}_i$.

In one or more embodiments, a comparison of $a$ and $b$ may be performed using a scheme proposed herein, for example through a determination of whether $a$ is greater than $b$, $a$ is equal to $b$, or $a$ is smaller than $b$. In some embodiments, this determination may be made based on the most significant bit of $a + b$, wherein $a + a$ designates the sum (or addition) of $a$ and $b$, as the Boolean equal to ($a > b$) is linked to the most significant bit of $a + b$. As a consequence, in some embodiments, a comparison of $a$ and $b$ may be performed based on a result of the addition of $a$ and $b$.

In one or more embodiments, the addition of $a$ and $b$ may be computed "in place", that is, through a quantum circuit that performs an operation that may be represented for example by:

$$|a\rangle\,|b\rangle \;\longmapsto\; |a\rangle\,|a{+}b\rangle$$

In some embodiments, the addition operation performed on $a$ and $b$ may be represented by:

$$|a\rangle\,_n|b\rangle_n\,|z\rangle \;\longmapsto\; |a\rangle_n\,|a{+}b\rangle_n|z \oplus (a+b)_n\rangle$$

Where a register initially containing a bit z may be overloaded with the bit of overflow of the sum of $a$ and $b$.

In order for the proposed scheme to be usable as a quantum adder that can be used in a quantum computational device, the proposed circuit may typically be designed reversible. As a consequence, for example, the proposed circuit may be designed to reset any used ancillary qubit to its initial value (e.g. $|0\rangle$) at the end of the circuit.

In the following, the sum of $a$ and $b$ may sometimes be denoted as the n+1-bit number $s$, with a binary expansion $s = (s_n, ..., s_0)$, and the string of successive carries encountered during the addition operation may sometimes be denoted as the n+1-bit number $c$, with a binary expansion $c = (c_n, ..., c_0)$.

A ripple-carry addition operation may then be described by the following recursive definitions. The carry bits $(c_i)_{i=0,...,n}$ may first be computed using the following operation:

$$c_i = \begin{cases} 0 & for\ i = 0 \\ a_{i-1}b_{i-1} \oplus b_{i-1}c_{i-1} \oplus c_{i-1}a_{i-1} & for\ i \in [\![1,n]\!] \end{cases}$$

Once the carry bits have been computed, the sum bits $(s_i)_{i=0,...,n}$ may be computed using the following operation:

$$s_i = \begin{cases} a_i \oplus b_i \oplus c_i & for\ i \in [\![0, n-1]\!] \\ c_n & for\ i = n \end{cases}$$

In a ripple-carry addition operation, the above recursive definition of the carry bits may be used to calculate all of the carries recursively (e.g. one after the other), based on their predecessor and the corresponding bits of $a$ and $b$, in cascade.

Once all the carries have been computed, the bits of the sum $s$ may be calculated as described above.

In one or more embodiments, the carries may further be un-computed once they have been used for the calculation of the sum $s$ in order to generate a adder circuit which is reversible. In the present subject disclosure, the term "un-compute" refers to, given a set of operations (e.g. represented by a set of quantum gates) applied to input data to generate result data, applying a corresponding set of operations (e.g. represented by a set of quantum gates that are conjugate transpose of the set of quantum gates of the set of operations) to the result data to recover the input data.

Different schemes for computing the sum of two n-bit numbers can advantageously be used on a quantum computer (in which case the two n-bit numbers may represent two qubits to be added):

In some embodiments, an addition operation of the ripple-carry addition type may be implemented using a first computation phase (which may be referred to herein as a "carry computing phase") directed to the computation of carry bits, and a second computation phase (which may be referred to herein as a "sum computing phase") directed to the computation of the sum bits.

In some embodiments, an adder may therefore use $O(1)$ ancillary qubits, run in $O(n)$ delay, and have a quantum cost in a $O(n)$.

Another scheme for computing the sum of two n-bit numbers that is usable on a quantum computer is known as "carry-lookahead addition". Adders of this type have the advantage of having a delay of $O(\log n)$, however the major drawback of requiring $O(n)$ ancillary qubits.

Yet another scheme for computing the sum of two n-bit numbers that is usable on a quantum computer uses a quantum Fourier transform. Adders of this type have the advantage not to use any ancillary qubit and of having a delay of $O(\log n)$, however the major drawback of a high quantum cost of $O(n^2)$.

In the present subject disclosure, an addition scheme that uses a ripple-carry approach is provided, which benefits from the advantages of a low use of quantum memory and low quantum cost.

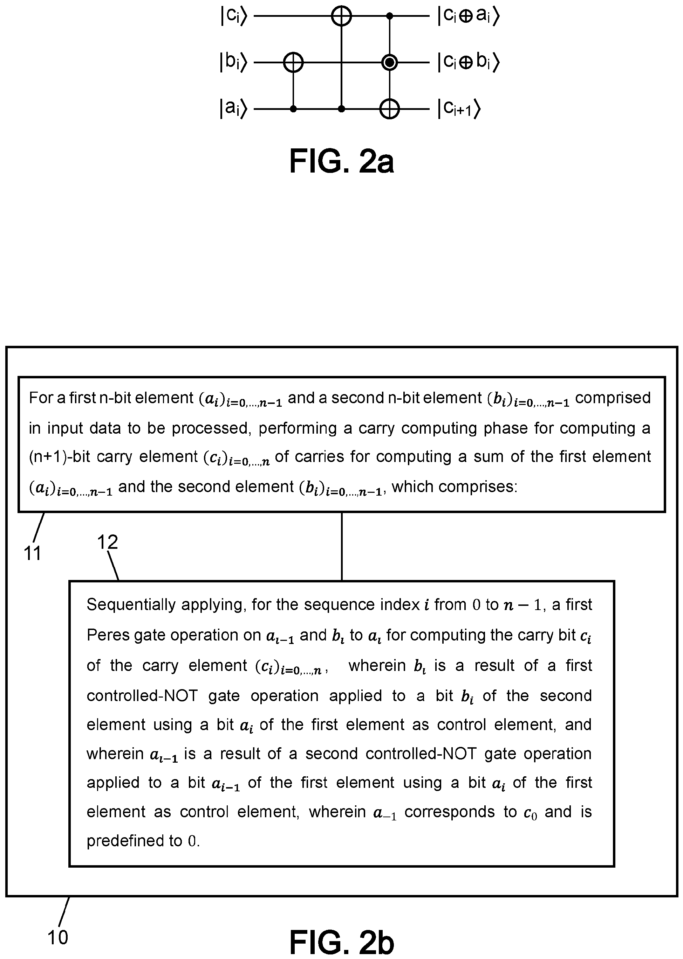

The present subject disclosure introduces a new routine for computing carries, as illustrated by Fig. 2a, and proposes to use such routine to design new quantum circuits (that may be used, depending on the embodiment, for addition and comparison of numbers). Specifically, embodiments for a quantum ripple-carry adder may advantageously be used for a low delay addition circuit that achieves a quantum delay as low as $8n + O(1)$. Other embodiments for a quantum ripple-carry adder may advantageously be used for a cost-efficient addition circuit that achieves a quantum coast as low as $10n + O(1)$.

Fig. 2b shows a block diagram illustrating the data processing (10) of input data comprising data of a first n-bit element $a = (a_i)_{i=0,\ldots,n-1}$ and a second n-bit element $b = (b_i)_{i=0,\ldots,n-1}$ according to embodiments of the present subject disclosure.

Such data processing may advantageously be implemented by a quantum computational device, e.g. by a quantum processing node of a computer system, and provides performances that makes it particularly well suited for quantum computing.

In the present subject disclosure, embodiments of the proposed data processing scheme are described in the context of quantum computing, that is, for implementation by a quantum computational device. In this context, the terms "bit" and "qubit" may be used interchangeably to designate a qubit. However, it will be appreciated by those having ordinary skill in the relevant art that any suitable computing environment, including a non-quantum computing environment or a hybrid quantum/non-quantum environment, may be used to implement the proposed scheme in place of the quantum computing context described herein, which is given by way of example only.

In embodiments in which the proposed scheme in used for quantum computing, the first and second elements $a$ and $b$ may represent a first and second qubits, respectively.

In one or more embodiments, a carry computing phase for computing a (n+1)-bit carry element $c = (c_i)_{i=0,\ldots,n}$ of carries for computing a sum of the first element $a = (a_i)_{i=0,\ldots,n-1}$ and the second element $b = (b_i)_{i=0,\ldots,n-1}$ is performed.

In some embodiments, the carry computing phase may comprise an operation of sequentially applying, for the sequence index $i$ from 0 to $n - 1$, a first Peres gate operation on $\widetilde{a_{i-1}}$ and $\widetilde{b_i}$ to $\widetilde{a_i}$ for computing the carry bit $c_i$ of the carry element $(c_i)_{i=0,\ldots,n}$, wherein $\widetilde{b_i}$ is a result of a first controlled-NOT gate operation applied to a bit $b_i$ of the second element using a i-th bit $a_i$ of the first element as control element, and wherein $\widetilde{a_{i-1}}$ is a result of a second controlled-NOT gate operation applied to a (i-1)-th bit $a_{i-1}$ of the first element using the i-th bit $a_i$ of the first element as control element, wherein $a_{-1}$ corresponds to $c_0$ and is (an ancillary bit) predefined to 0.

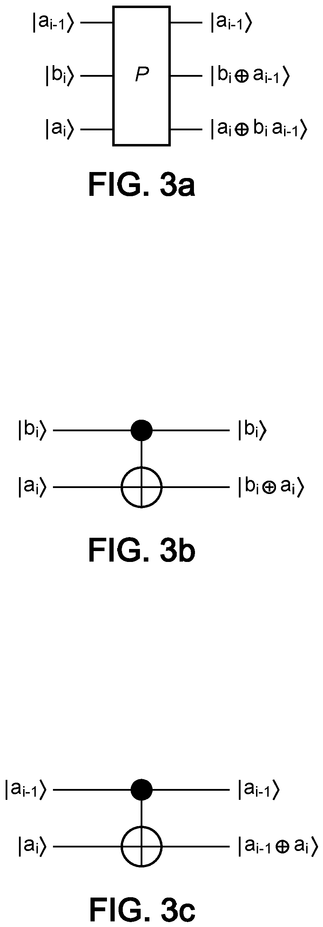

For example, in some embodiments, the sequentially applying the first Peres gate operation may be performed through applying, starting with the bit position $i = 0$ and ending with the bit position $i = n - 1$, a Peres gate operation on $(|a_{i-1}\rangle, |b_i\rangle, |a_i\rangle)$, as illustrated by Fig. 3a.

Since the first element $a$ may be defined with $n$ bit positions numbered $\widetilde{a_0}$ to $\widetilde{a_{n-1}}$, the Peres gate operation that is performed for the bit index $i = 0$ which would involve bit $a_{-1}$ may be performed in some embodiments using an ancillary bit denoted $c_0$ (as a Peres gate operation performed on bits $(a_{-1}, b_0, a_0)$ may be used to compute the bit $c_1$ of the carry element c to be calculated during the carry computation phase). In some embodiments, the bit $a_{-1}$ (the bit being also denoted $c_0$) may be initialized with any preconfigured value, such as for example 0.

As a consequence, in embodiments in which $|c_0\rangle$ is an ancillary qubit initialized to 0, the input state of the input data elements a and b may be represented as: $|c_0\rangle(\otimes_{i=0}^{n-1}|b_i\rangle|a_i\rangle)|z\rangle$ ,where $\otimes$ designates a tensor product.

Therefore, in some embodiments, a Peres gate operation may be performed on $(A_{-1}, B_0, A_0)$, further to which a Peres gate operation may be performed on $(A_0, B_1, A_1)$, further to which a Peres gate operation may be performed on $(A_1, B_2, A_2)$, etc. until a Peres gate operation performed on $(A_{n-2}, B_{n-1}, A_{n-1})$.

This sequential use of a Peres gate $(A_{i-1}, B_i, A_i)$ can be represented by the following operation on the bits of the first and second input elements $a$ and b:

$$|c_0 \oplus a_0\rangle (\otimes_{i=0}^{n-2} |b_i \oplus c_i\rangle |a_{i+1} \oplus c_{i+1}\rangle) |b_{n-1} \oplus c_{n-1}\rangle |c_n\rangle |z\rangle$$

Advantageously, the present subject disclosure introduces the use of a Peres gate in a carry computation phase of a data processing of two input data elements a and b that may represent qubits to be added, and therefore benefits from the performances of the Peres gate in terms of use of ancillary qubits, delay and quantum cost, which renders the proposed scheme particularly attractive for implementation for quantum computing.

As discussed above, the bit value $\widetilde{b_i}$ may in some embodiments be a result of a first controlled-NOT gate operation applied to the i-th bit $b_i$ of the second element $b$, using the i-th bit $a_i$ of the first element $a$ as control element.
In some embodiments, the carry computing phase may therefore further comprise applying a first controlled-NOT gate operation to (data held/stored in a corresponding bit position of) each i-th bit $a_i$ of the first element used as control bit and (data held/stored in a corresponding bit position of) each i-th bit $b_i$ of the second element used as target bit.
For example, in some embodiments, the first controlled-NOT gate operation which may be applied to (data held/stored in a corresponding bit position of) each i-th bit $a_i$ of the first element used as control bit and (data held/stored in a corresponding bit position of) each i-th bit $b_i$ of the second element used as target bit may be performed through applying, for each sequence index $i$, starting with the sequence index $i = 0$ and ending with the sequence index $i = n - 1$, a first controlled-NOT gate operation on (data held/stored in a corresponding bit position of) bit $a_i$ of the first element used as control bit and (data held/stored in a corresponding bit position of) bit $b_i$ of the second element used as target bit: $CNOT(A_i, B_i)$, as illustrated by Fig. 3b.
As the proposed first controlled-NOT gate operation is applied to bits of the first and second elements of the same rank, the first controlled-NOT gate operation may be performed in parallel for each bit of the first and second elements. In other embodiments, the first controlled-NOT gate operation may be performed sequentially on the bits of the first and second elements.
The use of a first CNOT gate operation, for $i = 0$ to $n - 1$, with control bit $A_i$ and target qubit $B_i$ can be represented by the following operation on the initial input state $|c_0\rangle (\otimes_{i=0}^{n-1} |b_i\rangle |a_i\rangle) |z\rangle$, which becomes:

$$|c_0\rangle (\otimes_{i=0}^{n-1} |b_i \oplus a_i\rangle |a_i\rangle) |z\rangle$$ .

As discussed above, the bit value $\widetilde{a_{i-1}}$ may in some embodiments be a result of a second controlled-NOT gate operation applied to (data held/stored in a corresponding bit position of) the (i-1)-th bit $a_{i-1}$ of the first element a, using (data held/stored in a corresponding bit position of) the i-th bit $a_i$ of the first element $a$ as control element.
For example, in some embodiments, the carry computing phase may further comprise, further to applying the first controlled-NOT gate operation: sequentially applying, for the sequence index $i$ from 0 to $n - 1$, a second controlled-NOT gate operation to (data held/stored in a corresponding bit position of) the i-th bit $a_i$ of the first element $a$ used as control bit, and (data held/stored in a corresponding bit position of) the (i-1)-th bit $a_{i-1}$ of the first element $a$ used as result bit.
For example, in some embodiments, the second controlled-NOT gate operation which may be sequentially applied to (data held/stored in a corresponding bit position of) each i-th bit $a_i$ position (further to applying the first CNOT gate operation to this bit position) of the first element a used as control bit and (data held/stored in a corresponding bit position of) the (i-1)-th bit $a_{i-1}$ position (further to applying the first CNOT gate operation to this bit position) of the first element $a$ used as target bit may be performed through sequentially applying, for each sequence index $i$, starting with the sequence index $i = 0$ and ending with the sequence index $i = n - 1$, a second controlled-NOT gate operation to (data held/stored in a corresponding bit position of) the i-th bit $a_i$ of the first element a used as control bit, and (data held/stored in a corresponding bit position of) the (i-1)-th bit $a_{i-1}$ of the first element a used as result bit ($CNOT(A_i, A_{i-1})$ as illustrated by Fig. 3c).
Since the first element $a$ may be defined with $n$ bit positions numbered $a_0$ to $a_{n-1}$, the second CNOT gate operation that is performed for the bit index $i = 0$ which would involve bit $a_{-1}$ may be performed in some embodiments using an ancillary bit denoted $c_0$ (corresponding to data held/stored in a corresponding bit position of memory (e.g. in an ancillary bit register)). In some embodiments, the bit $a_{-1}$ (the bit being also denoted $c_0$) may be initialized with any preconfigured value, such as for example 0.
The use of a second CNOT gate operation, for a sequence index $i = 0$ to $n - 1$, with control qubit $A_i$ and target qubit $A_{i-1}$ can be represented by the following operation on the initial input state $|c_0\rangle (\otimes_{i=0}^{n-1} |b_i\rangle |a_i\rangle) |z\rangle$ transformed as

$$|c_0\rangle(\otimes_{i=0}^{n-1}|b_i\oplus a_i\rangle|a_i\rangle)|z\rangle$$ by the first CNOT gate operation, as:

$$|c_0\oplus a_0\rangle(\otimes_{i=0}^{n-2}|b_i\oplus c_i\rangle|a_{i+1}\oplus a_{i+1}\rangle)|b_{n-1}\oplus a_{n-1}\rangle|a_{n-1}\rangle|z\rangle.$$

In one or more embodiments, the first Peres gate operation may be sequentially applied on the qubits (bit positions) ($A_{i-1}$, $B_i$, $A_i$) of this state to obtain the following transformed state :

$$|c_0\oplus a_0\rangle(\otimes_{i=0}^{n-2}|b_i\oplus c_i\rangle|a_{i+1}\oplus c_{i+1}\rangle)|b_{n-1}\oplus c_{n-1}\rangle|c_n\rangle|z\rangle.$$

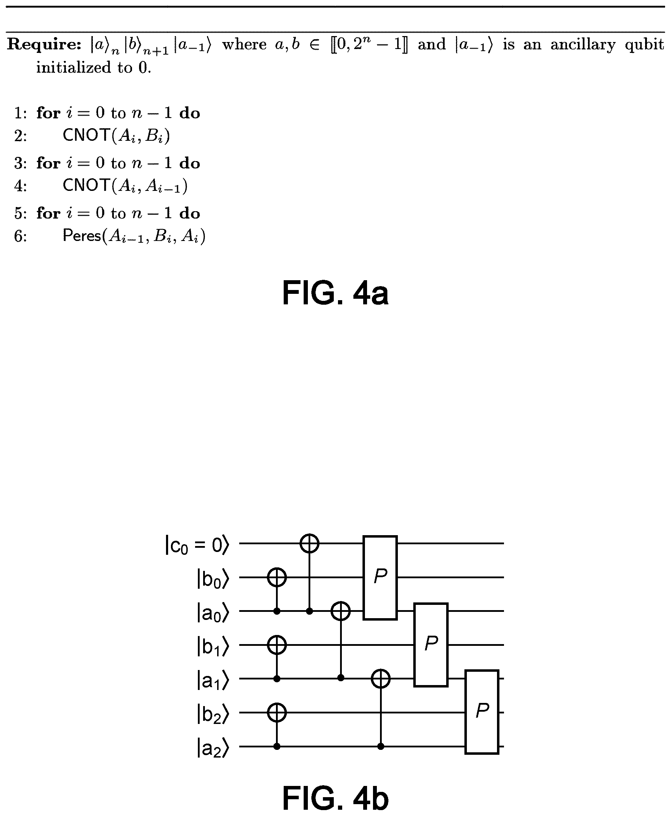

In one or more embodiments, the carry computing phase may comprise, given an input state represented as $$|c_0\rangle(\otimes_{i=0}^{n-1}|b_i\rangle|a_i\rangle)|z\rangle$$ the first CNOT gate operation, the second CNOT gate operation, and the first Peres gate operation as illustrated on Fig. 4a which shows an exemplary algorithm and Fig. 4b which shows a schematic of an exemplary embodiment of these operations of the carry computing phase.

In one or more embodiments, the carry computing phase may implement operation of the circuit for computing carries illustrated by Fig. 2a.

In one or more embodiments, a low delay ripple-carry addition scheme is proposed.

In such embodiments, the carry computing phase may further comprise, further to applying the first Peres gate operation: applying a third controlled-NOT gate operation to (data held/stored in a corresponding bit position of) each i-th bit $a_{i-1}$ of the first element used as control bit and (data held/stored in a corresponding bit position of) each i-th bit $b_i$ of the second element used as result bit.

Since the first element $a$ may be defined with $n$ bit positions numbered $a_0$ to $a_{n-1}$, the third CNOT gate operation that is performed for the bit index $i = 0$ which would involve the bit $a_{-1}$ may be performed in some embodiments using an ancillary bit denoted $c_0$ (corresponding to data held/stored in a corresponding bit position of memory (e.g. in an ancillary bit register)). In some embodiments, the bit $a_{-1}$ (the bit being also denoted $c_0$) may be initialized with any preconfigured value, such as for example 0.

Since the carry element may have a size of n qubits, an ancillary bit $z$ (corresponding to data held/stored in a corresponding bit position of memory (e.g. in an ancillary bit register)) may be used in some embodiments as target bit to store the (n+1)-th carry bit $c_n$ computed using the third CNOT gate operation.

In some embodiments, an input state corresponding to $$|c_0\rangle(\otimes_{i=0}^{n-1}|b_i\rangle|a_i\rangle)|z\rangle$$, where $\otimes$ designates a tensor product, which may be transformed to:

$$|c_0\oplus a_0\rangle(\otimes_{i=0}^{n-2}|b_i\oplus c_i\rangle|a_{i+1}\oplus c_{i+1}\rangle)|b_{n-1}\oplus c_{n-1}\rangle|c_n\rangle|z\rangle$$ by the applications of the first CNOT gate operation, second CNOT gate operation, and first Peres gate operation, may be transformed to the following state through the third CNOT gate operation:

$$|c_0\oplus a_0\rangle(\otimes_{i=0}^{n-2}|b_i\oplus a_i\rangle|a_{i+1}\oplus c_{i+1}\rangle)|b_{n-1}\oplus a_{n-1}\rangle|c_n\rangle|z\oplus c_n\rangle.$$

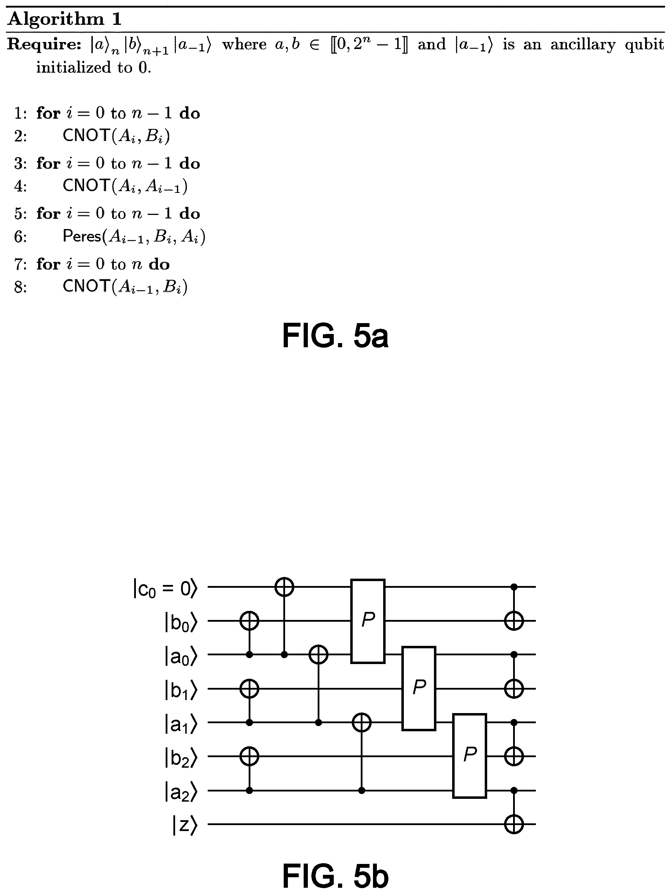

In one or more embodiments, the carry computing phase may comprise, given an input state represented as $$|c_0\rangle(\otimes_{i=0}^{n-1}|b_i\rangle|a_i\rangle)|z\rangle$$ the first CNOT gate operation, the second CNOT gate operation, the first Peres gate operation, and the third CNOT gate operation, as illustrated on Fig. 5a which shows an exemplary algorithm and Fig. 5b which shows a schematic of an exemplary embodiment of these operations of the carry computing phase.

In one or more embodiments, further to the applying the third CNOT gate operation as part of the carry computing phase, a sum computing phase may be performed for computing a (n+1)-bit sum element $(s_i)_{i=0,...,n}$ of a result of the computation of the sum of the first element $(a_i)_{i=0,...,n-1}$ and the second element $(b_i)_{i=0,...,n-1}$.

In some embodiments, the sum computation phase may comprise: sequentially applying, for the sequence index i from 0 to $n$ - 1, a second Peres gate operation on (data held/stored in a corresponding bit position of)

$$\widetilde{a_{n-i-1}}$$

and

$$\widetilde{b_{n-\imath}}$$

to

$$\widetilde{a_{n-\imath}}$$

for computing the sum bit $s_{n-i}$ of the sum element $(s_i)_{i=0,\dots,n}$. The bits

$$\widetilde{a_{n-\imath-1}}, \ \widetilde{a_{n-\imath}},$$

and

$$\widetilde{b_{n-\imath}}$$

may correspond to the data held in the corresponding bit positions of the results of the carry computation phase applied to the bits of the first and second elements, respectively.

In some embodiments, the sum computing phase may comprise an operation of sequentially applying, for the sequence index $i$ from 0 to $n$ - 1, a second Peres gate operation on (data held/stored in a corresponding bit position of)

$$\widetilde{a_{n-\imath-1}}$$

and

$$\widetilde{b_{n-\imath}}^{'}$$

to

$$\widetilde{a_{n-\imath}}$$

for computing the sum bit $s_i$ of the sum element $(s_i)_{i=0,\dots,n}$, where

$$\widetilde{a_{n-\imath-1}}$$

and

$$\widetilde{b_{n-\imath}}$$

to

$$\widetilde{a_{n-\imath}}$$

correspond to qubit values respectively stored (held in memory) in respective bits $a_{n-i-1}$ and $b_{n-i}$ to $a_{n-i}$ further to the completion of the carry computation phase, for example as illustrated by Fig. 5b for an exemplary case where $n = 3$.

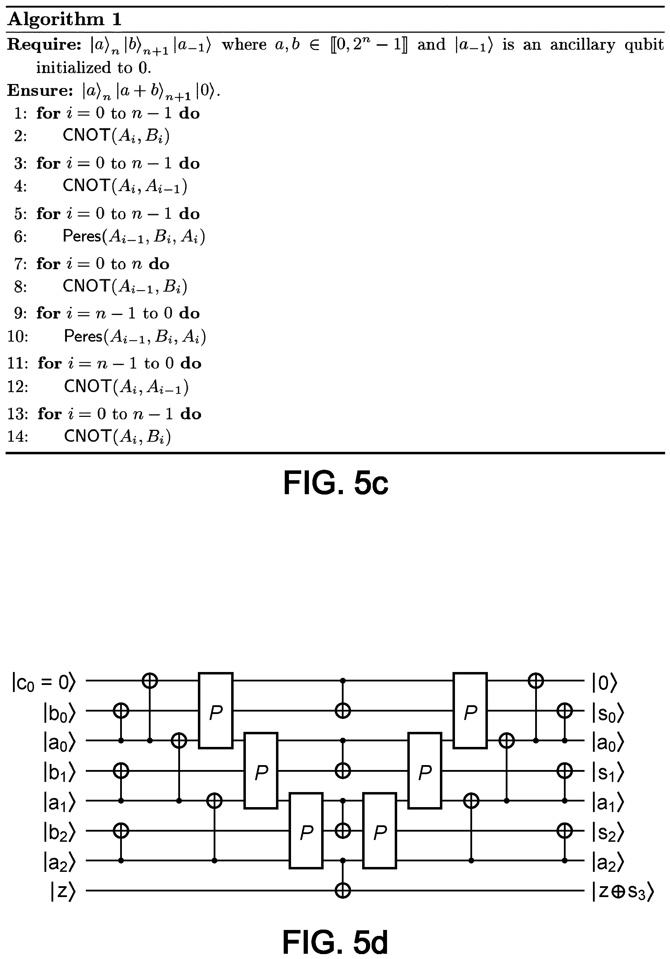

For example, in some embodiments, the sequentially applying the third Peres gate operation may be performed through applying, starting with the sequence index $i = n$ - 1 and ending with the sequence index $i = 0$, a Peres gate operation on $(A_{i-1}, B_i, A_i)$, as illustrated by Fig. 5c (references 9 and 10) and Figs. 5d - 5e (in the exemplary case where $n = 3$).

Therefore, in some embodiments, further to the carry computing phase, a (second) Peres gate operation may be performed on (data held/stored in a corresponding bit position of) $(A_{n-2}, B_{n-1}, A_{n-1})$, further to which a (second) Peres gate operation may be performed on (data held/stored in a corresponding bit position of) $(A_{n-3}, B_{n-1}. A_{n-1})$, further to which a (second) Peres gate operation may be performed on (data held/stored in a corresponding bit position of) $(A_{n-4}, B_{n-3}, A_{n-3})$, etc. until a (second) Peres gate operation performed on (data held/stored in a corresponding bit position of) $(A_{-1}, B_0, A_0)$.

This sequential use of a (second) Peres gate $(A_{i-1}, B_i, A_i)$ can be represented by the following operation on the bit positions of the first and second input elements *a* and *b* (which hold data representing the initial state as transformed by the carry computation phase):

$$|c_0 \oplus a_0\rangle(\otimes_{i=0}^{n-2} |b_i \oplus c_i\rangle|a_i \oplus a_{i+1}\rangle)|b_{n-1} \oplus c_{n-1}\rangle|a_{n-1}\rangle|z \oplus c_n\rangle .$$

Advantageously, the present subject disclosure also introduces the use of a Peres gate in a sum computation phase of a data processing of two input data elements a and b that may represent qubits to be added, and therefore benefits from the performances of the Peres gate in terms of use of ancillary qubits, delay and quantum cost, which renders the proposed scheme particularly attractive for implementation for quantum computing.

In one or more embodiments, further to a carry computing phase which may comprise, given an input state for example represented as $|c_0\rangle(\otimes_{i=0}^{n-1} |b_i\rangle|a_i\rangle)|z\rangle$ the first CNOT gate operation, the second CNOT gate operation, the first Peres gate operation and the third CNOT gate operation as illustrated on Fig. 5a which shows an exemplary algorithm and Fig. 5b which shows a schematic of an exemplary embodiment of these operations of the carry computing phase in the exemplary case where $n = 3$, a sum computing phase may be performed, which may comprise the second Peres gate operation as illustrated on Fig. 5c which shows an exemplary algorithm and Figs. 5d - 5e which show schematics of exemplary embodiments of these operations of the carry computing phase and sum computing phase in the exemplary case where $n = 3$.

In some embodiments, the sum computing phase may further comprise, further to sequentially applying the second Peres gate operation: sequentially applying, for a sequence index *i* from 0 to *n* - 1, a fourth controlled-NOT gate operation to (data held/stored in a corresponding bit position of) a (i-1)-th bit $a_{i-1}$ of the first element used as control bit, and (data held/stored in a corresponding bit position of) an i-th bit $a_i$ of the first element used as result bit. In some embodiments, (data held/stored in a corresponding bit position of) the bit $a_{-1}$ may correspond to the 0-th bit $c_0$ of the carry element, and may be predefined, for example to 0.

For example, in some embodiments, the fourth controlled-NOT gate operation which may be sequentially applied to (data held/stored in a corresponding bit position of) each (i-1)-th bit $a_{i-1}$ (further to applying the second Peres gate operation to this bit position) of the first element *a* used as control bit, and (data held/stored in a corresponding bit position of) the i-th bit $a_i$ (further to applying the second Peres gate operation to this bit position) of the first element *a* used as target bit, may be performed through sequentially applying, for each bit position *i*, starting with the sequence index (bit position) $i = n - 1$ and ending with the sequence index (bit position) $i = 0$, a fourth controlled-NOT gate operation to (data held/stored in a corresponding bit position of) the (i-1)-th bit $a_{i-1}$ of the first element *a* used as control bit, and (data held/stored in a corresponding bit position of) the i-th bit $a_i$ of the first element *a* used as result bit $(CNOT(A_i, A_{i-1}))$, as illustrated by Fig. 3c).

Since the first element *a* may be defined with *n* bit positions numbered $a_0$ to $a_{n-1}$, the fourth CNOT gate operation that is performed for (data held/stored in a corresponding bit position of) the bit index $i = 0$ which would involve bit $a_{-1}$ may be performed in some embodiments using an ancillary bit denoted $c_0$ (corresponding to data held/stored in a corresponding bit position of memory (e.g. in an ancillary bit register)). In some embodiments, the bit $a_{-1}$ (the bit being also denoted $c_0$) may be initialized with any preconfigured value, such as for example 0

The use of a fourth CNOT gate operation, for a sequence index $i = n - 1$ to 0, with control qubit $A_{i-1}$ and target qubit $A_i$ can be represented by the following operation on the initial input state $|c_0\rangle(\otimes_{i=0}^{n-1} |b_i\rangle|a_i\rangle)|z\rangle$ transformed as:

$$|c_0 \oplus a_0\rangle(\otimes_{i=0}^{n-2} |b_i \oplus c_i\rangle|a_i \oplus a_{i+1}\rangle)|b_{n-1} \oplus c_{n-1}\rangle|a_{n-1}\rangle|z \oplus c_n\rangle$$ by the carry computing phase and the second Peres gate operation, as: $|c_0\rangle(\otimes_{i=0}^{n-1} |b_i \oplus c_i\rangle|a_i\rangle)|z \oplus c_n\rangle .$

In one or more embodiments, further to a carry computing phase which may comprise, given an input state for example represented as $|c_0\rangle(\otimes_{i=0}^{n-1} |b_i\rangle|a_i\rangle)|z\rangle$ the first CNOT gate operation, the second CNOT gate operation, the first Peres gate operation and the third CNOT gate operation as illustrated on Fig. 5a which shows an exemplary algorithm and Fig. 5b which shows a schematic of an exemplary embodiment of these operations of the carry computing phase in the exemplary case where $n = 3$, a sum computing phase may be performed, which may comprise the second Peres gate operation and the fourth CNOT gate operation as illustrated on Fig. 5c which shows an exemplary algorithm and Figs. 5d - 5e which show schematics of exemplary embodiments of these operations of the carry computing phase and sum computing phase in the exemplary case where $n = 3$.

In some embodiments, the sum computing phase may further comprise, further to sequentially applying the fourth controlled-NOT gate operation: applying a fifth controlled-NOT gate operation to (data held/stored in a corresponding bit position of) each i-th bit $a_i$ position of the first element used as control bit and (data held/stored in a corresponding bit position of) each i-th bit $b_i$ position of the second element used as target bit.

For example, in some embodiments, the fifth controlled-NOT gate operation which is applied to (data held/stored in a corresponding bit position of) each i-th bit $a_i$ (further to applying the fourth CNOT gate operation to this bit position) of the first element $a$ used as control bit, and (data held/stored in a corresponding bit position of) the i-th bit $b_i$ (further to applying the fourth CNOT gate operation to this bit position) of the second element $b$ used as target bit, may be performed through applying for each sequence index (bit position) $i$, starting with the sequence index (bit position) $i = 0$ and ending with the sequence index (bit position) $i = n$ - 1, a fifth controlled-NOT gate operation on (data held/stored in a corresponding bit position of) bit $a_i$ of the first element used as control bit and (data held/stored in a corresponding bit position of) bit $b_i$ of the second element used as target bit ($CNOT(A_i, B_i)$, as illustrated by Fig. 3b).

As the proposed fifth controlled-NOT gate operation is applied to data (held/stored) in bit positions of the first and second elements of the same rank, the fifth controlled-NOT gate operation may be performed in parallel for each (data held/stored in a corresponding bit position of) bit position of a given rank of the first and second elements. In other embodiments, the fifth controlled-NOT gate operation may be performed sequentially on data (held/stored) in the bit positions of the first and second elements.

The use of a fifth CNOT gate operation, for sequence index (bit position) $i = 0$ to $n$ - 1, with control qubit $A_i$ and target qubit $B_i$ can be represented by the following operation on the initial input state $|c_0\rangle(\otimes_{i=0}^{n-1}|b_i\rangle|a_i\rangle)|z\rangle$ transformed as $|c_0\rangle(\otimes_{i=0}^{n-1}|b_i\oplus c_i\rangle|a_i\rangle)|z\oplus c_n\rangle$ by the carry computing phase, the second Peres gate operation, and the fourth CNOT gate operation, as: $|c_0\rangle(\otimes_{i=0}^{n-1}|s_i\rangle|a_i\rangle)|z\oplus c_n\rangle$.

In one or more embodiments, further to a carry computing phase which may comprise, given an input state for example represented as $|c_0\rangle(\otimes_{i=0}^{n-1}|b_i\rangle|a_i\rangle)|z\rangle$ the first CNOT gate operation, the second CNOT gate operation, the first Peres gate operation and the third CNOT gate operation as illustrated on Fig. 5a which shows an exemplary algorithm and Fig. 5b which shows a schematic of an exemplary embodiment of these operations of a carry computing phase in the exemplary case where $n = 3$, a sum computing phase may be performed, which may comprise the second Peres gate operation, the fourth CNOT gate operation and the fifth CNOT gate operation, as illustrated on Fig. 5c which shows an exemplary algorithm and Figs. 5d - 5e which show schematics of exemplary embodiments of these operations of the carry computing phase and sum computing phase in the exemplary case where $n = 3$.

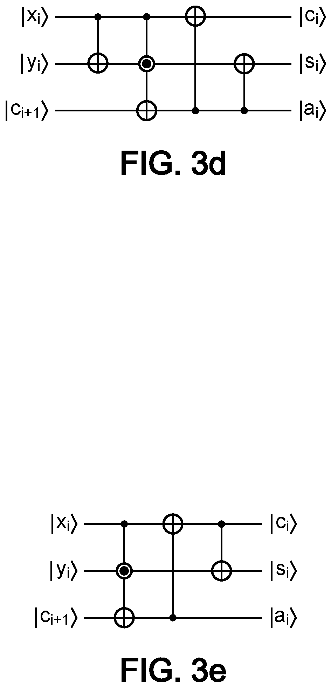

In one or more embodiments, the proposed addition circuit may implement operations of the circuit for uncomputing carries and computing a sum illustrated by Fig. 3d. In Fig. 3d, $x_i = c_i \oplus a_i$, and $y_i = c_i \oplus b_i$.

Performances of a proposed low delay ripple-carry adder scheme, an example of which is illustrated by Fig. 5c (and Figs. 5d - 5e for exemplary cases where $n = 3$) can be measured in terms of quantum cost and delay of the operations used in the proposed scheme:

First CNOT gate operation: All the operations can be performed in parallel, in which case the first CNOT gate operation has a quantum cost of n and a delay of $1\Delta$.

Second CNOT gate operation: The quantum cost of this operation is once again n. In some embodiments, CNOT gates may be configured to operate in series. However, in some embodiments they may be configured for, except for the first two gates, operating in parallel with the Peres gates of the next operation (first Peres gate operation), in which case this second CNOT gate operation may have a delay of $2\Delta$.

First Peres gate operation: In some embodiments, Peres gates may be configured to operate in series, and may in some embodiments be further configured to work for the $(n$ - 2) first gates in parallel with CNOT gates of the second CNOT gate operation. A Peres gate having a quantum cost of 4 and a delay of $4\Delta$, the quantum cost of the first Peres gate operation may in some embodiments be reduced to 4n and its delay to $4n\Delta$.

Third CNOT gate operation: All the CNOT gates can be applied in parallel, in which case the third CNOT gate operation has a quantum cost of $n + 1$ and a delay of $1\Delta$.

For all operations of the sum computing phase, performances may be determined based on that these operations "uncompute" the operations of the first CNOT gate operation, second CNOT gate operation, and first Peres gate operation.

All in all, when summing up the quantum cost and delay of each operations of one of the proposed schemes, we obtain a total quantum cost of $n + n + 4n + (n + 1) + 4n + n + n = 13n + 1$, and a delay of $1\Delta + 2\Delta + 4n\Delta + 1\Delta + 4n\Delta + 2\Delta + 1\Delta = (8n + 7)\Delta$.

In some embodiments, the proposed ripple-carry adder scheme comprises a carry computing phase which comprises the first CNOT gate operation, second CNOT gate operation, first Peres gate operation, and third CNOT gate operation, to compute the carry bits $c_i$ corresponding to the recursive definition used in a ripple-carry adder. The proposed ripple-carry adder scheme further comprises a sum computation phase, which comprises the second Peres gate operation, fourth CNOT gate operation and fifth CNOT gate operation, to compute the bits of the sum $s_i$ while uncomputing the carry bits. Once the sum computation phase is complete, we obtain a state where the data of the sum $s$ replace the data of the second element $b$.

In such embodiments, the proposed ripple-carry adder scheme advantageously provides an adder scheme with a delay as low as $8n + O(1)$, for a reasonable quantum cost of $13n + O(1)$.

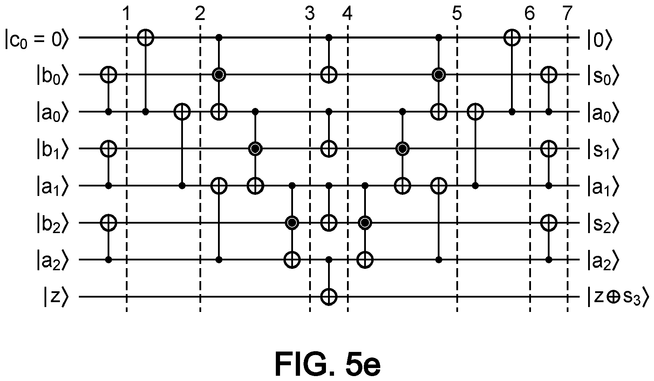

In one or more embodiments, a shallow ripple-carry adder scheme (circuit) is proposed (exemplary adder scheme 1). Figures 5d and 5e illustrate embodiments of the proposed shallow ripple-carry adder.

The proposed shallow ripple-carry adder uses the circuit shown in Figure 2a for computation of the carries and a circuit for computing the bits of the sum that can be advantageously parallelized as illustrated in Figure 3d.

In the following, a letter in capital $M$ may be used to refer to a memory location initially storing (holding) a value (bit) $m$. Initially, $M$ may correspond to the qubit $|m\rangle$. For example, the notation $A_i$ may be used to indifferently refer to a memory location that initially contains the bit $a_i$, as the qubit $|a_i\rangle$.

In some embodiments, given input data to be added, an input state of the proposed scheme may be represented by: $|c_0\rangle(\otimes_{i=0}^{n-1} |b_i\rangle|a_i\rangle)|z\rangle$

Where $\otimes$ designates a tensor product, $|c_0\rangle$ designates an ancillary qubit initialized to a predetermined value (e.g. $|0\rangle$), and $|z\rangle$ designates a qubit in which the most significant bit of the sum $s$ will be XORed.

The exemplary input state may be transformed through the following sequence of quantum gate operations, as illustrated by the circuits of Figures 5d and 5e in the exemplary case where $n = 3$.

Quantum gate operation 1-1: In some embodiments, for $i = 0$ to $n - 1$, a CNOT gate operation may be applied with control qubit $A_i$, and target qubit $B_i$.

The above exemplary input state may become:

$$|c_0\rangle(\otimes_{i=0}^{n-1} |b_i\oplus a_i\rangle|a_i\rangle)|z\rangle$$

This CNOT gate operation involves a quantum cost / size of $n$ and a delay / depth of 1.

Quantum gate operation 2-1: In some embodiments, for $i = 0$ to $n - 1$, a CNOT gate operation may be applied with control bit $A_i$, and target qubit $A_{i-1}$ (the notation $A_{-1}$ may also refer to the qubit $C_0$).

The above exemplary transformed input state may further be transformed to:

$$|c_0\oplus a_0\rangle(\otimes_{i=0}^{n-2} |b_i\oplus a_i\rangle|a_i\oplus a_{i+1}\rangle)|b_{n-1}\oplus a_{n-1}\rangle|a_{n-1}\rangle|z\rangle$$

This CNOT gate operation involves a quantum cost / size of $n$, and may be performed by gates which operate in series. However, except for the first two gates, they can all work in parallel with the Peres gates of the Peres gate operation of quantum gate operation 3-1 described below. This CNOT gate operation therefore involves a delay of 2.

Quantum gate operation 3-1: In some embodiments, for $i = 0$ to $n - 1$, a Peres gate operation may be applied on $(A_{i-1}, B_i, A_i)$.

The above exemplary transformed state may further be transformed to:

$$|c_0\oplus a_0\rangle(\otimes_{i=0}^{n-2} |b_i\oplus c_i\rangle|a_{i+1}\oplus c_{i+1}\rangle)|b_{n-1}\oplus c_{n-1}\rangle|c_n\rangle|z\rangle$$

This Peres gate operation involves a quantum cost of $4n$ and a size of $15n$ for a delay of $4n$ and a depth of $9n$.

Quantum gate operation 4-1: In some embodiments, for $i = 0$ to $n$, a CNOT gate operation may be applied with control qubit $A_{i-1}$, and target qubit $B_i$ (the notation $B_n$ may also refer to the qubit $Z$).

The above exemplary transformed state may further be transformed to:

$$|c_0\oplus a_0\rangle(\otimes_{i=0}^{n-2} |b_i\oplus a_i\rangle|a_{i+1}\oplus c_{i+1}\rangle)|b_{n-1}\oplus a_{n-1}\rangle|c_n\rangle|z\oplus c_n\rangle$$

This CNOT gate operation involves a quantum cost / size of $n + 1$ and a delay / depth of 1.

Quantum gate operation 5-1: In some embodiments, for $i = n - 1$ to 0, a Peres gate operation may be applied on $(A_{i-1}, B_i, A_i)$.

The above exemplary transformed state may further be transformed to:

$$|c_0 \oplus a_0\rangle (\otimes_{i=0}^{n-2} |b_i \oplus c_i\rangle |a_i \oplus a_{i+1}\rangle) |b_{n-1} \oplus c_{n-1}\rangle |a_{n-1}\rangle |z \oplus c_n\rangle$$

This Peres gate operation also involves a quantum cost of $4n$ and a size of $15n$ for a delay of $4n$ and a depth of $9n$.

Quantum gate operation 6-1: In some embodiments, for $i = n - 1$ to 0, a CNOT gate operation may be applied with control qubit $A_i$ and target qubit $A_{i-1}$.

The above exemplary transformed state may further be transformed to:

$$|c_0\rangle (\otimes_{i=0}^{n-1} |b_i \oplus c_i\rangle |a_i\rangle) |z \oplus c_n\rangle$$

This CNOT gate operation has the same performances as the CNOT gate operation 2-1.

Quantum gate operation 7-1: In some embodiments, for $i = 0$ to $n - 1$, a CNOT gate operation may be applied with control qubit $A_i$ and target qubit $B_i$.

The above exemplary transformed state may further be transformed to:

$$|c_0\rangle (\otimes_{i=0}^{n-1} |s_i\rangle |a_i\rangle) |z \oplus c_n\rangle$$

This CNOT gate operation involves a quantum cost / size of $n$ and a delay / depth of 1.

In some embodiments, since $s_n = c_n$ by definition, the register $Z$ may contain the XOR of the value z it initially contained and the most significant bit of the sum at the end of the computation in cases where $z = 0$.

The proposed complete shallow ripple-carry adder circuit may have a quantum cost equal to $2(n + n + 4n) + n + 1 = 13n + 1$ and a size equal to $2(n + n + 15n) + n + 1 = 35n + 1$, for a delay equal to $2(1 + 2 + 4n) + 1 = 8n + 7$ and a depth equal to $2(1 + 2 + 9n) + 1 = 18n + 7$.

Quantum gates operations 1-1 to 3-1 compute the carry bits $c_i$ thanks to the recursive definition given by the following Equation for computing carry bits $(c_i)_{i=0,\ldots,n}$:

$$c_i = \begin{cases} 0 & for\ i = 0 \\ a_{i-1}b_{i-1} \oplus b_{i-1}c_{i-1} \oplus c_{i-1}a_{i-1} & for\ i \in [\![1, n]\!] \end{cases}$$

Quantum gate operations 4-1 to 7-1 compute the bits of the sum $s_i$ and uncompute the carry bits at the same time. In the end, the final state is:

$$|a\rangle_n |s\rangle_{n+1}$$

The proposed shallow ripple-carry adder scheme can advantageously achieve a delay as low as $8n + O(1)$, for a reasonable quantum cost of $13n + O(1)$.

In one or more embodiments, a cost efficient ripple-carry addition scheme with low delay is proposed.

In such embodiments, the carry computing phase may further comprise, further to applying the first Peres gate operation: applying a sixth controlled-NOT gate operation to (data held/stored in a corresponding bit position of) the n-th bit $a_{n-1}$ of the first element used as control bit and (data held/stored in a corresponding bit position of) an ancillary bit $z$ used as target (result) bit to store the (n+1)-th carry bit $c_n$.

Since the carry element may have a size of n qubits, an ancillary bit $z$ (corresponding to data held/stored in a corresponding bit position of memory (e.g. in an ancillary bit register)) may be used in some embodiments as target bit to store the (n+1)-th carry bit $c_n$ computed using the sixth CNOT gate operation.

In some embodiments, one may consider the carry bit $c_0$ (corresponding to data held/stored in a corresponding bit position of memory (e.g. in an ancillary bit register)) as an ancillary qubit initialized to 0. Given two n-bit elements $a$ and $b$ to be added, an input state to the addition scheme may therefore be:

$$|c_0\rangle (\otimes_{i=0}^{n-1} |b_i\rangle |a_i\rangle) |z\rangle$$

In some embodiments, an input state corresponding to $|c_0\rangle (\otimes_{i=0}^{n-1} |b_i\rangle |a_i\rangle) |z\rangle$, which may be transformed to $|c_0 \oplus a_0\rangle (\otimes_{i=0}^{n-2} |b_i \oplus c_i\rangle |a_{i+1} \oplus c_{i+1}\rangle) |b_{n-1} \oplus c_{n-1}\rangle |c_n\rangle |z\rangle$ by the applications of the first CNOT gate operation, second CNOT gate operation, and first Peres gate operation, may be transformed to the following state through the sixth CNOT gate operation:

$$\left|c_0 \oplus a_0\right\rangle \left(\otimes_{i=0}^{n-2} \left|b_i \oplus c_i\right\rangle \left|a_{i+1} \oplus c_{i+1}\right\rangle\right) \left|b_{n-1} \oplus c_{n-1}\right\rangle \left|c_n\right\rangle \left|z \oplus c_n\right\rangle$$

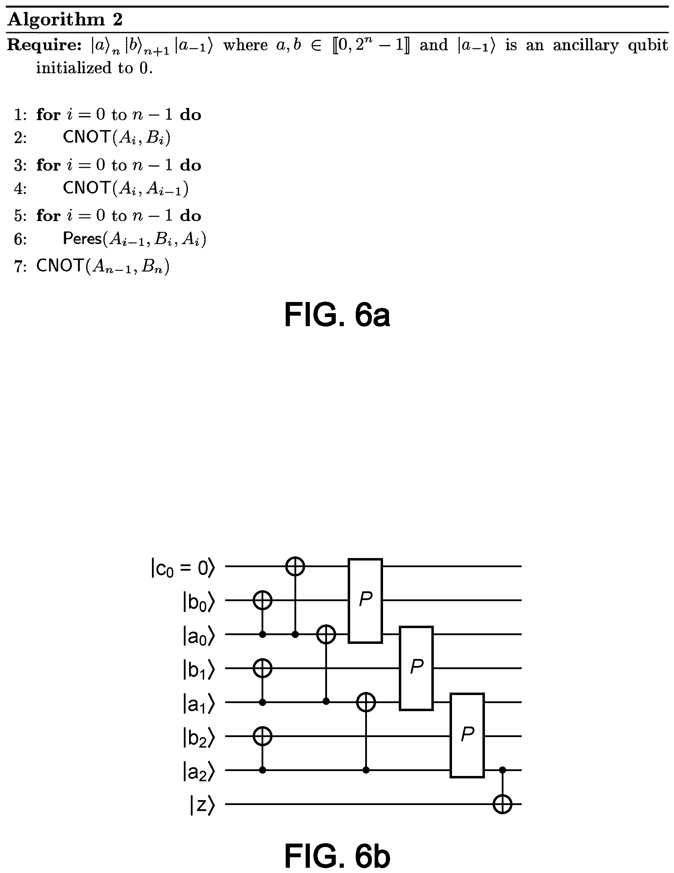

In one or more embodiments, the carry computing phase may comprise, given an input state represented as $\left|c_0\right\rangle \left(\otimes_{i=0}^{n-1} \left|b_i\right\rangle \left|a_i\right\rangle\right) \left|z\right\rangle$, the first CNOT gate operation, the second CNOT gate operation, the first Peres gate operation, and the sixth CNOT gate operation, as illustrated on Fig. 6a which shows an exemplary algorithm and Fig. 6b which shows a schematic of an exemplary embodiment of these operations of the carry computing phase.

In one or more embodiments, further to the applying the sixth CNOT gate operation as part of the carry computing phase, a sum computing phase may be performed for computing a (n+1)-bit sum element $(s_i)_{i=0,\ldots,n}$ of a result of the computation of the sum of the first element $(a_i)_{i=0,\ldots,n-1}$ and the second element $(b_i)_{i=0,\ldots,n-1}$.

In some embodiments, the sum computation phase may comprise: sequentially applying, for the sequence index (bit position) $i$ from $n - 1$ to 0, the following operations: a conjugate transpose Peres gate operation on (data held/stored in a corresponding bit position of)

$$\widetilde{a_{n-i-1}}$$

and (data held/stored in a corresponding bit position of)

$$\widetilde{b_{n-i}}$$

to (data held/stored in a corresponding bit position of)

$$\widetilde{a_{n-i}}$$

for computing the sum bit $s_{n-i}$ of the sum element $(s_i)_{i=0,\ldots,n}$, wherein the (data held/stored in a corresponding bit position of) bits

$$\widetilde{a_{n-i-1}}\,\widetilde{a_{n-i}},$$

and

$$\widetilde{b_{n-i}}$$

are the results of the carry computation phase applied to the bits of the first and second elements, respectively. Further to applying the conjugate transpose Peres gate operation, apply a seventh controlled-NOT gate operation to (data held/stored in a corresponding bit position of) the (n-i-1)-th bit $a_{n-i-1}$ of the first element used as control bit and (data held/stored in a corresponding bit position of) the (n-i-2)-th bit $a_{n-i-2}$ of the first element used as target bit; and further to applying the seventh controlled-NOT gate operation, apply an eighth controlled-NOT gate operation to (data held/stored in a corresponding bit position of) the (n-i-2)-th bit $a_{n-i-2}$ of the first element used as control bit and (data held/stored in a corresponding bit position of) the (n-i-1)-th bit $b_{n-i-1}$ of the second element used as result bit, wherein $a_{-1}$ corresponds to $c_0$ and is predefined, for example to 0.

In some embodiments, the sum computing phase may comprise an operation of sequentially applying, for the sequence index (bit position) $i$ from $n - 1$ to 0, a set of operations comprising the following three operations:

A conjugate transpose Peres gate operation on

$$\widetilde{a_{n-i-1}}$$

and

$$\widetilde{b_{n-\imath}}$$

to

$$\widetilde{a_{n-\imath}} \; .$$

for computing the sum bit $s_{n-i}$ of the sum element $(s_i)_{i=0,...,n}$, wherein (data held/stored in a corresponding bit position of) the bits

$$\widetilde{a_{n-\imath-1}}, \; \widetilde{a_{n-\imath}},$$

and

$$\widetilde{b_{n-\imath}}$$

are the results of the carry computation phase applied to the bits of the first and second elements, respectively, for example as illustrated by Fig. 6b for an exemplary case where $n = 3$.

Further to applying the conjugate transpose Peres gate operation, applying a seventh controlled-NOT gate operation to (data held/stored in a corresponding bit position of) the (n-i-1)-th bit $a_{n-i-1}$ of the first element used as control bit and (data held/stored in a corresponding bit position of) the (n-i-2)-th bit $a_{n-i-2}$ of the first element used as target bit.

Further to applying the seventh controlled-NOT gate operation, applying an eighth controlled-NOT gate operation to (data held/stored in a corresponding bit position of) the (n-i-2)-th bit $a_{n-i-2}$ of the first element used as control bit and (data held/stored in a corresponding bit position of) the (n-i-1)-th bit $b_{n-i-1}$ of the second element used as result bit, wherein $a_{-1}$ corresponds to $c_0$ and is predefined, for example to 0.

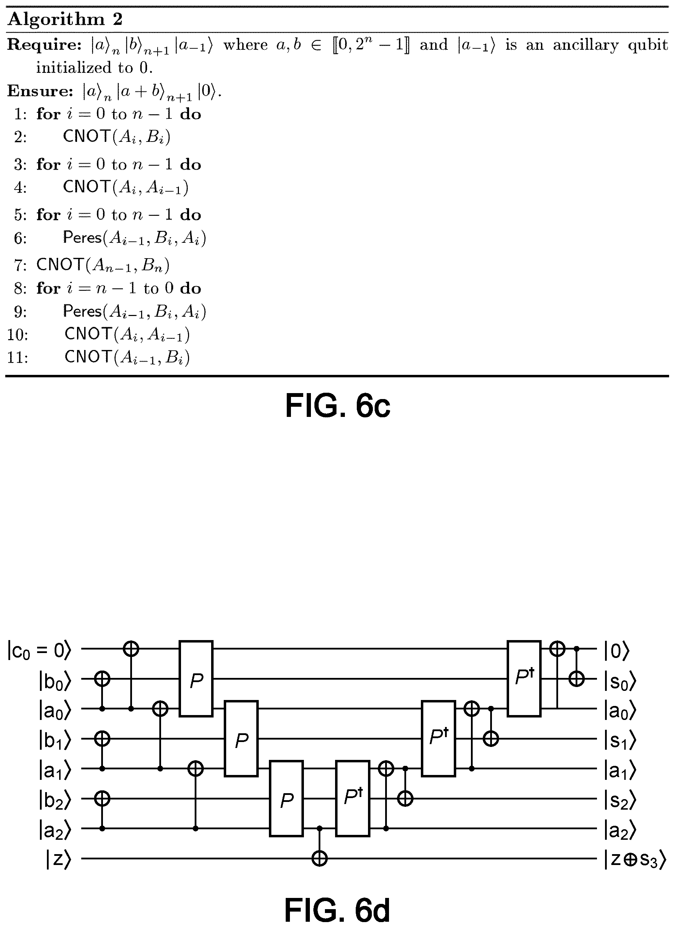

For example, in some embodiments, the sequentially applying the set of operations comprising the conjugate transpose Peres gate operation, the seventh controlled-NOT gate operation and the eighth controlled-NOT gate operation may be performed through applying, starting with the sequence index (bit position) $i = n - 1$ and ending with the sequence index (bit position) $i = 0$, the set of operations as illustrated by Fig. 6c (references 9 to 11) and Figs. 6d - 6e (for exemplary cases where $n = 3$).

In one or more embodiments, an input state corresponding to $|c_0\rangle(\otimes_{i=0}^{n-1} |b_i\rangle|a_i\rangle)|z\rangle$, which may be transformed to:

$$|c_0 \oplus a_0\rangle(\otimes_{i=0}^{n-2} |b_i \oplus c_i\rangle|a_{i+1} \oplus c_{i+1}\rangle)|b_{n-1} \oplus c_{n-1}\rangle|c_n\rangle|z \oplus c_n\rangle$$

by the applications of the first CNOT gate operation, second CNOT gate operation, first Peres gate operation, and sixth CNOT gate operation, may be transformed to the following state through the sequential application of the set of operations comprising the conjugate transpose Peres gate operation, the seventh controlled-NOT gate operation and the eighth controlled-NOT gate operation, starting with the sequence index (bit position) $i = n - 1$ and ending with the sequence index (bit position) $i = 0$, to the following state: $|c_0\rangle(\otimes_{i=0}^{n-1} |s_i\rangle|a_i\rangle)|z \oplus c_n\rangle$

In some embodiments, a set of operations may be sequentially applied, for a bit index (sequence index, bit position) $i = n - 1$ to 0, which comprises applying a conjugate transpose Peres gate on $(A_{i-1}, B_i, A_i)$, followed by a CNOT gate with control qubit $A_i$ and a target qubit $A_{i-1}$, and a second CNOT gate with control qubit $A_{i-1}$ and target qubit $B_i$.

In one or more embodiments, as the value of the nth-bit of the carry element $c$ may correspond to that of the sum element $s$ to be calculated ($c_n = s_n$), a register $Z$ may contain the OR of the value $z$ it initially contained (at the start of the computation of the sum), and the most significant bit of the sum (at the end of the computation of the sum).

In one or more embodiments, the proposed addition circuit may implement operations of the circuit for uncomputing carries and computing a sum illustrated by Fig. 3e. In Fig. 3e, $x_i = c_i \oplus a_i$, and $y_i = c_i \oplus b_i$.

Performances of a proposed ripple-carry adder scheme, an example of which is illustrated by Fig. 6c (and Fig. 6d - 6e for exemplary cases where n=3) can be measured in terms of quantum cost and delay of the operations used in the proposed scheme:

First CNOT gate operation: All the operations can be performed in parallel, in which case the first CNOT gate operation has a quantum cost of n and a delay of $1\Delta$ ($\Delta$ being the execution time of an elementary quantum gate (1 or 2 qubit quantum gate), which depends on the quantum technology used for implementing embodiments of the present subject disclosure).

Second CNOT gate operation: The quantum cost of this operation is once again n. In some embodiments, CNOT gates may be configured to operate in series. However, in some embodiments they may be configured for, except for the first two gates, operating in parallel with the Peres gates of the next operation (first Peres gate operation), in which case this second CNOT gate operation may have a delay of $2\Delta$.

First Peres gate operation: In some embodiments, Peres gates may be configured to operate in series, and may in some embodiments be further configured to work for the ($n$ - 2) first gates in parallel with CNOT gates of the second CNOT gate operation. A Peres gate having a quantum cost of 4 and a delay of $4\Delta$, the quantum cost of the first Peres gate operation may in some embodiments be reduced to $4n$ and its delay to $4n\Delta$.

Fifth CNOT gate operation: The fifth CNOT gate operation has a quantum cost of 1 and a delay of $1\Delta$.

Last set of operations: The last set of operations may in some embodiments consist in n successive blocks of one Peres gate and two CNOT gates, resulting in a quantum cost of 6n and a delay $6n\Delta$.

In some embodiments, the total quantum cost of the complete adder circuit may be equal to: $n + n + 4n + 1 + 6n = 12n + 1$, and may have a total delay of $1\Delta + 2\Delta + 4n\Delta + 1\Delta + 6n\Delta = (10n + 4)\Delta$.

In some embodiments, the proposed ripple-carry adder scheme comprises a carry computing phase which comprises the first CNOT gate operation, second CNOT gate operation, first Peres gate operation, and sixth CNOT gate operation, to compute the carry bits $c_i$ corresponding to the recursive definition used in a ripple-carry adder. The proposed ripple-carry adder scheme further comprises a sum computation phase, which comprises the conjugate transpose Peres gate operation, seventh CNOT gate operation and eighth CNOT gate operation, to compute the bits of the sum $s_i$ while uncomputing the carry bits. Once the sum computation phase is complete, we obtain a state where the data of the sum s replace the data of the second element $b$.

In such embodiments, the proposed ripple-carry adder scheme advantageously provides an adder scheme with a computation cost as low as $12n + 1$ (that is, even lower than the cost of the proposed low delay adder), while still maintaining a reasonable quantum delay of $(10n + 4)\Delta$.

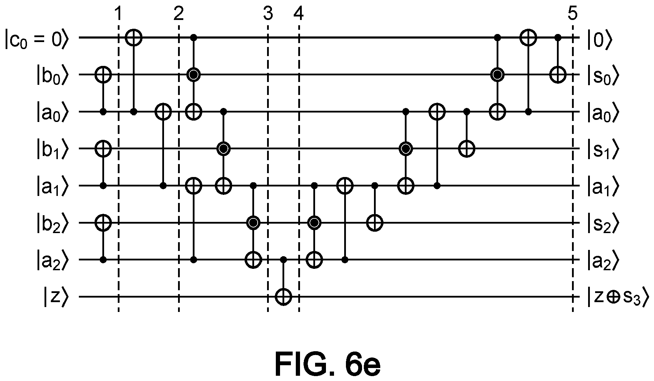

In one or more embodiments, a size-efficient ripple-carry adder scheme (circuit) is proposed (exemplary adder scheme 2). Figures 6d and 6e illustrate embodiments of the proposed size-efficient ripple-carry adder.

The proposed size-efficient ripple-carry adder uses the circuit shown in Figure 2a for computation of the carries and a circuit for computing the bits of the sum that can be advantageously parallelized as illustrated in Figure 3e.

In the following, a letter in capital M may be used to refer to a memory location initially storing (holding) a value m.

In some embodiments, given input data to be added, an input state of the proposed scheme may be represented by:

$$|c_0\rangle(\otimes_{i=0}^{n-1}|b_i\rangle|a_i\rangle)|z\rangle$$

Where $\otimes$ designates a tensor product, $|c_0\rangle$ designates an ancillary qubit initialized to a predetermined value (e.g. $|0\rangle$), and $|z\rangle$ designates a qubit in which the most significant bit of the sum $s$ will be XORed.

The exemplary input state may be transformed through the following sequence of quantum gate operations, as illustrated by the circuits of Figures 5d and 5e in the exemplary case where $n = 3$.

Quantum gate operation 1-2: In some embodiments, for $i = 0$ to $n - 1$, a CNOT gate operation may be applied with control qubit $A_i$, and target qubit $B_i$.

The above exemplary input state may become:

$$|c_0\rangle(\otimes_{i=0}^{n-1}|b_i\oplus a_i\rangle|a_i\rangle)|z\rangle$$

This CNOT gate operation involves a quantum cost / size of $n$ and a delay / depth of 1.

Quantum gate operation 2-2: In some embodiments, for $i = 0$ to $n - 1$, a CNOT gate operation may be applied with control bit $A_i$, and target qubit $A_{i-1}$ (the notation $A_{-1}$ may also refer to the qubit $C_0$).

The above exemplary transformed input state may further be transformed to:

$$|c_0 \oplus a_0\rangle (\otimes_{i=0}^{n-2} |b_i \oplus a_i\rangle |a_i \oplus a_{i+1}\rangle) |b_{n-1} \oplus a_{n-1}\rangle |a_{n-1}\rangle |z\rangle$$

This CNOT gate operation involves a quantum cost / size of $n$, and may be performed by gates which operate in series. However, except for the first two gates, they can all work in parallel with the Peres gates of the Peres gate operation of quantum gate operation 3-2 described below. This CNOT gate operation therefore involves a delay of 2.

Quantum gate operation 3-2: In some embodiments, for $i = 0$ to $n - 1$, a Peres gate operation may be applied on $(A_{i-1}, B_i, A_i)$.

The above exemplary transformed state may further be transformed to:

$$|c_0 \oplus a_0\rangle (\otimes_{i=0}^{n-2} |b_i \oplus c_i\rangle |a_{i+1} \oplus c_{i+1}\rangle) |b_{n-1} \oplus c_{n-1}\rangle |c_n\rangle |z\rangle$$

This Peres gate operation involves a quantum cost of $4n$ and a size of $15n$ for a delay of $4n$ and a depth of $9n$.

Quantum gate operation 4-2: In some embodiments, a CNOT gate operation may be applied with control qubit $A_{n-1}$, and target qubit $Z$.

The above exemplary transformed state may further be transformed to:

$$|c_0 \oplus a_0\rangle (\otimes_{i=0}^{n-2} |b_i \oplus c_i\rangle |a_{i+1} \oplus c_{i+1}\rangle) |b_{n-1} \oplus c_{n-1}\rangle |c_n\rangle |z \oplus c_n\rangle$$

This CNOT gate operation involves a quantum cost / size of 1 and a delay / depth of 1.

Quantum gate operation 5-2: In some embodiments, for $i = n - 1$ to 0, the following operations are performed: a conjugate transpose Peres gate operation may be applied on $(A_{i-1}, B_i, A_i)$, followed by a CNOT gate operation with control qubit $A_i$, and target qubit $A_{i-1}$, itself followed by another CNOT gate operation with control qubit $A_{i-1}$, and target qubit $B_i$.

The above exemplary transformed state may further be transformed to:

$$|c_0\rangle (\otimes_{i=0}^{n-1} |s_i\rangle |a_i\rangle) |z \oplus c_n\rangle$$

This sequence of (conjugate transpose Peres - first CNOT - second CNOT) gate operations involves a quantum cost of $6n$ and a size of $17n$, with a delay of $6n$, and a depth of $11n$.

In some embodiments, since $s_n = c_n$ by definition, the register $Z$ may contain at the end of the computation the XOR of the value z it initially contained and the most significant bit $s_n$ of the sum.

The proposed complete size-efficient ripple-carry adder circuit may have a quantum cost equal to $n + n + 4n + 1 + 6n = 12n + 1$ and a size equal to $n + n + 15n + 1 + 17n = 34n + 1$, for a delay equal to $1 + 2 + 4n + 1 + 6n = 10n + 4$ and a depth equal to $1 + 2 + 9n + 1 + 11n = 20n + 4$.

Quantum gates operations 1-2 to 3-2 compute the carry bits $c_i$ thanks to the recursive definition given by the following Equation for computing carry bits $(c_i)_{i=0,\ldots,n}$:

$$c_i = \begin{cases} 0 & for\ i = 0 \\ a_{i-1}b_{i-1} \oplus b_{i-1}c_{i-1} \oplus c_{i-1}a_{i-1} & for\ i \in [\![1,n]\!] \end{cases}$$

Quantum gate operations 4-2 to 5-2 compute the bits of the sum $s_i$ and uncompute the carry bits at the same time. In the end, the final state is:

$$|a\rangle_n |s\rangle_{n+1}$$

In one or more embodiments, a quantum circuit may be configured to perform a comparison operation (quantum comparator), which may in some embodiments be represented as follows:

$$|a\rangle |b\rangle |z\rangle \longmapsto |a\rangle |b\rangle |z \oplus y\rangle$$

where $y = 1$ if and only if $a \leq b$ (i.e., $y = 0$ if and only if $a > b$).

In some embodiments, the routine for computing carries described above and illustrated by Figure 2a may be used in a circuit configured for comparing two numbers.

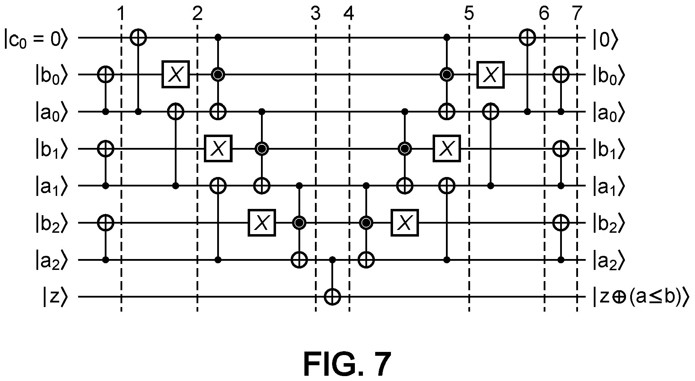

In some embodiments, a proposed circuit for comparing a and b may comprise three stages, as illustrated by Figure 7 (in an exemplary case where $n = 3$) and described below:

In a first stage (references 1 to 3 on Fig. 7)), X quantum gates are applied on every single bit of b, and operations of the routine for computing carries described above and illustrated by Figure 2a are applied (thereafter).

In a second stage (reference 4 on Fig. 7), a CNOT quantum gate is applied with control qubit $A_{n-1}$ and target qubit Z.

In a third stage (references 5 to 7 on Fig. 7), operations of the first stage are uncomputed.

In some embodiments, the proposed comparator circuit may have a quantum cost equal to $2(n + n + n + 4n) + 1 = 14n + 1$ and a size equal to $2(n + n + n + 15n) + 1 = 36n + 1$, for a delay equal to $2(1 + 2 + 4n) + 1 = 8n + 7$ and a depth of $2(1 + 2 + 9n) + 1 = 18n + 7$.

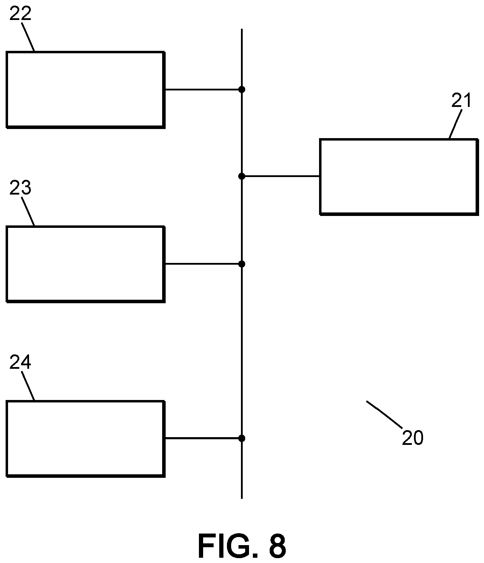

An exemplary architecture of a quantum computational device according to the present subject disclosure is illustrated on Fig. 8, which shows a quantum computational device (20) configured to perform a data processing method or implement a data processing quantum circuit in accordance with embodiments of the present subject disclosure.

The quantum computational device (20) includes a data processing engine (21), an input interface (22), an output interface (23), and a memory (24).

In the architecture illustrated on Fig. 8, all of the input interface (22), output interface (23), and memory (24) are operatively coupled with one another through the data processing engine (21).

In some embodiments, the input interface (22) is configured for receiving quantum data representing a first n-bit element $(a_i)_{i=0,...,n-1}$ and a second n-bit element $(b_i)_{i=0,...,n-1}$ comprised in input data to be processed, and transmitting such quantum data to the data processing engine (21) for further processing according to embodiments of the present subject disclosure.

In some embodiments, the output interface (23) is configured for outputting data representing a result of a processing according to embodiments of the present subject disclosure.

In some embodiments, the data processing engine (21) is configured for performing data processing functions according to embodiments of the present subject disclosure. For example, depending on the embodiment, the data processing engine (21) may be configured for implementing a quantum circuit according to embodiments of the present subject disclosure, such as, for example one or more of the quantum circuits illustrated by Figs. 4b, 5b, 5d, 5e, 6b, 6d, 6e, and 7.

The data processing engine (21) may include or may be included in a quantum processor, which may be any suitable quantum processing unit (QPU) and/or state machine, or a combination thereof.

Depending on the embodiment, the data processing engine (21) may implement a quantum logic-gate based circuit as proposed in the present subject disclosure using any suitable quantum computing technology and architecture (e.g. trapped ion, neutral atoms in optical lattices, superconducting, superconductor spin qubits, photonics, superconducting transmon, nuclear magnetic resonance).

The data processing engine (21) may also comprise, or may be in communication with, quantum computer storage media, such as, without limitation, the memory (24) (which may be a quantum memory). In addition, the memory (24) may be any type of quantum data storage or quantum computer storage medium coupled to the data processing engine (21) and operable with the interfaces (22) and (23) to facilitate management of data held/stored in association therewith, such as, for example, any memory configured for storing quantum data comprising qubits (e.g. an atomic gas quantum memory, a solid quantum memory, a gradient echo memory and any combination thereof).

It will be appreciated that the quantum computational device (20) shown and described with reference to Fig. 8 is provided by way of example only. Numerous other architectures, operating environments, and configurations are possible. Other embodiments of the device may include fewer or greater number of components, and may incorporate some or all of the functionality described with respect to the device components shown in Fig. 8. Accordingly, although the input interface (22), output interface (23), memory (24), and data processing engine (21) are illustrated as part of the device (20), no restrictions are placed on the location and control of components (21) - (24). In particular, in other embodiments, components (21) - (24) may be part of different entities or computing systems.

In particular, the device (20) may be embedded in a quantum computer system, a quantum computing unit, or any other device comprising a quantum processor operatively coupled with a (quantum) memory.

The device (20), and more generally any device configured for implementing embodiments of the present subject disclosure, may be implemented in software, in hardware, or in a combination of software and hardware.

Although this subject disclosure has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the subject disclosure. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1. A data processing method for use on a quantum computational device, comprising, for a first n-bit element $(a_i)_{i=0,...,n-1}$ and a second n-bit element $(b_i)_{i=0,...,n-1}$ comprised in input data to be processed, performing a carry computing phase for computing a (n+1)-bit carry element $(c_i)_{i=0,...,n}$ of carries for computing a sum of the first element $(a_i)_{i=0,...,n-1}$ and the second element $(b_i)_{i=0,...,n-1}$, which comprises:

   Sequentially applying, for the sequence index $i$ from 0 to $n$ - 1, a first Peres gate operation on $\widetilde{a_{i-1}}$ and $\widetilde{b_i}$ to $\widetilde{a_i}$ for computing the carry bit $c_i$ of the carry element $(c_i)_{i=0,...,n}$,

   Wherein $\widetilde{b_i}$ is a result of a first controlled-NOT gate operation applied to a i-th bit $b_i$ of the second element using a i-th bit $a_i$ of the first element as control element,

   Wherein $\widetilde{a_{i-1}}$ is a result of a second controlled-NOT gate operation applied to a bit $a_{i-1}$ of the first element using the i-th bit $a_i$ of the first element as control element, and
   wherein $a_{-1}$ corresponds to $c_0$ and is predefined.

2. The data processing method of claim 1, wherein the carry computing phase further comprises:
   Applying a first controlled-NOT gate operation to each i-th bit $a_i$ of the first element used as control bit and each i-th bit $b_i$ of the second element used as target bit.

3. The data processing method of claim 2, wherein the carry computing phase further comprises, further to applying the first controlled-NOT gate operation:
   Sequentially applying, for a sequence index $i$ from 0 to $n$ - 1, a second controlled-NOT gate operation to the i-th bit $a_i$ of the first element used as control bit and the (i-1)-th bit $a_{i-1}$ of the first element a used as target bit, wherein $a_{-1}$ corresponds to $c_0$ and is predefined.

4. The data processing method of any of the preceding claims, wherein the carry computing phase further comprises, further to applying the first Peres gate operation:
   Applying a third controlled-NOT gate operation to each i-th bit $a_{i-1}$ of the first element used as control bit and each i-th bit $b_i$ of the second element used as result bit, wherein $a_{-1}$ corresponds to bit $c_0$ and is predefined.

5. The data processing method of claim 4, further comprising a sum computation phase performed after the carry computation phase for computing a (n+1)-bit sum element $(s_i)_{i=0,...,n}$ of a result of the computation of the sum of the first element $(a_i)_{i=0,...,n-1}$ and the second element $(b_i)_{i=0,...,n-1}$, wherein the sum computation phase comprises:

   Sequentially applying, for the sequence index $i$ from 0 to $n$ - 1, a second Peres gate operation on

   $$\widetilde{a_{n-i-1}}$$

   and (data held/stored in a corresponding bit position of)

   $$\widetilde{b_{n-i}}$$

to (data held/stored in a corresponding bit position of)

$$\overline{a_{n-\iota}}$$

for computing the sum bit $s_{n-i}$ of the sum element $(s_i)_{i=0,\ldots,n}$,
Wherein the bits

$$\overline{a_{n-\iota-1}}, \overline{a_{n-\iota}},$$

and

$$\overline{b_{n-\iota}}$$

are the results of the carry computation phase applied to the bits of the first and second elements, respectively.

6. The data processing method of claim 5, further comprising:
Further to sequentially applying the second Peres gate operation, sequentially applying, for a sequence index $i$ from 0 to $n$ - 1, a fourth controlled-NOT gate operation to a (i-1)-th bit $a_{i-1}$ of the first element used as control bit, and an i-th bit $a_i$ of the first element used as result bit, wherein $a_{-1}$ corresponds to bit $c_0$ of the carry element, and is predefined.

7. The data processing method of claim 6, further comprising:
Further to sequentially applying the fourth controlled-NOT gate operation, applying a fifth controlled-NOT gate operation to each i-th bit $a_i$ position of the first element used as control bit and each i-th bit $b_i$ position of the second element used as target bit.

8. The data processing method of any of claims 1 to 3, wherein the carry computing phase further comprises, further to applying the first Peres gate operation:
Applying a sixth controlled-NOT gate operation to the n-th bit $a_{n-1}$ of the first element used as control bit.

9. The data processing method of claim 8, further comprising a sum computation phase performed after the carry computation phase for computing a (n+1)-bit sum element $(s_i)_{i=0,\ldots,n}$ of a result of the computation of the sum of the first element $(a_i)_{i=0,\ldots,n-1}$ and the second element $(b_i)_{i=0,\ldots,n-1}$, wherein the sum computation phase comprises:
Sequentially applying, for the sequence index $i$ from $n$ - 1 to 0 , the following operations:

a conjugate transpose Peres gate operation on (data held/stored in a corresponding bit position of)

$$\overline{a_{n-\iota-1}}$$

and (data held/stored in a corresponding bit position of)

$$\overline{b_{n-\iota}}$$

to

$$\overline{a_{n-\iota}}$$

for computing the sum bit $s_{n-i}$ of the sum element $(s_i)_{i=0,\ldots,n}$,
Wherein the bits

$$\widetilde{a_{n-i-1}}, \ \widetilde{a_{n-i}},$$

and

$$\widetilde{b_{n-i}}$$

are the results of the carry computation phase applied to the bits of the first and second elements, respectively;
Further to applying the conjugate transpose Peres gate operation, apply a seventh controlled-NOT gate operation to the (n-i-1)-th bit $a_{n-i-1}$ of the first element used as control bit and the (n-i-2)-th bit $a_{n-i-2}$ of the first element used as target bit; and
Further to applying the seventh controlled-NOT gate operation, apply an eighth controlled-NOT gate operation to the (n-i-2)-th bit $a_{n-i-2}$ of the first element used as control bit and the (n-i-1)-th bit $b_{n-i-1}$ of the second element used as result bit,
wherein $a_{-1}$ corresponds to $c_0$ and is predefined.

10. The data processing method of any of the preceding claims, wherein the first and second elements represent a first and second qubits, respectively.

11. A non-quantum computational device, the device comprising a processor and a memory operatively coupled to the processor, wherein the device is configured to perform a method according to any of claims 1 to 10.

12. A quantum computational device, the device comprising a quantum processor and a memory operatively coupled to the quantum processor, wherein the device is configured to perform a method according to any of claims 1 to 10.

13. A computer program product comprising computer program code tangibly embodied in a computer readable medium, said computer program code comprising instructions to, when provided to a quantum computer system and executed, cause said computer to perform a method according to any of claims 1 to 10.

14. A computer program product comprising computer program code tangibly embodied in a computer readable medium, said computer program code comprising instructions to, when provided to a non-quantum computer system and executed, cause said computer to perform a method according to any of claims 1 to 10.

15. A data set representing, for example through compression or encoding, a computer program product according to any of claims 13 and 14.

$|a\rangle$ —⊕— $|\bar{a}\rangle$

**FIG. 1a**

$|a\rangle$ —●— $|a\rangle$

$|b\rangle$ —⊕— $|b \oplus a\rangle$

**FIG. 1b**

$|a\rangle$ — $P$ — $|a\rangle$

$|b\rangle$ — — $|b \oplus a\rangle$

$|c\rangle$ — — $|c \oplus ba\rangle$

**FIG. 1c**

FIG. 1d

FIG. 1e

FIG. 1f

$$|c_i\rangle \longrightarrow \oplus \longrightarrow |c_i \oplus a_i\rangle$$

$$|b_i\rangle \longrightarrow \oplus \longrightarrow |c_i \oplus b_i\rangle$$

$$|a_i\rangle \longrightarrow \bullet \longrightarrow |c_{i+1}\rangle$$

## FIG. 2a

For a first n-bit element $(a_i)_{i=0,\ldots,n-1}$ and a second n-bit element $(b_i)_{i=0,\ldots,n-1}$ comprised in input data to be processed, performing a carry computing phase for computing a (n+1)-bit carry element $(c_i)_{i=0,\ldots,n}$ of carries for computing a sum of the first element $(a_i)_{i=0,\ldots,n-1}$ and the second element $(b_i)_{i=0,\ldots,n-1}$, which comprises:

Sequentially applying, for the sequence index $i$ from 0 to $n-1$, a first Peres gate operation on $a_{i-1}$ and $b_i$ to $a_i$ for computing the carry bit $c_i$ of the carry element $(c_i)_{i=0,\ldots,n}$, wherein $b_i$ is a result of a first controlled-NOT gate operation applied to a bit $b_i$ of the second element using a bit $a_i$ of the first element as control element, and wherein $a_{i-1}$ is a result of a second controlled-NOT gate operation applied to a bit $a_{i-1}$ of the first element using a bit $a_i$ of the first element as control element, wherein $a_{-1}$ corresponds to $c_0$ and is predefined to 0.

## FIG. 2b

$|a_{i-1}\rangle$ ──────── $|a_{i-1}\rangle$

$|b_i\rangle$ ──── $P$ ──── $|b_i \oplus a_{i-1}\rangle$

$|a_i\rangle$ ──────── $|a_i \oplus b_i\, a_{i-1}\rangle$

# FIG. 3a

$|b_i\rangle$ ──────●────── $|b_i\rangle$

$|a_i\rangle$ ──────⊕────── $|b_i \oplus a_i\rangle$

# FIG. 3b

$|a_{i-1}\rangle$ ──────●────── $|a_{i-1}\rangle$

$|a_i\rangle$ ──────⊕────── $|a_{i-1} \oplus a_i\rangle$

# FIG. 3c

FIG. 3d

FIG. 3e

**Require:** $|a\rangle_n |b\rangle_{n+1} |a_{-1}\rangle$ where $a, b \in [\![0, 2^n - 1]\!]$ and $|a_{-1}\rangle$ is an ancillary qubit initialized to 0.

1: **for** $i = 0$ to $n - 1$ **do**
2:     CNOT$(A_i, B_i)$
3: **for** $i = 0$ to $n - 1$ **do**
4:     CNOT$(A_i, A_{i-1})$
5: **for** $i = 0$ to $n - 1$ **do**
6:     Peres$(A_{i-1}, B_i, A_i)$

# FIG. 4a

# FIG. 4b

## Algorithm 1

**Require:** $|a\rangle_n |b\rangle_{n+1} |a_{-1}\rangle$ where $a, b \in [\![0, 2^n - 1]\!]$ and $|a_{-1}\rangle$ is an ancillary qubit initialized to 0.

1: **for** $i = 0$ to $n - 1$ **do**
2:      CNOT$(A_i, B_i)$
3: **for** $i = 0$ to $n - 1$ **do**
4:      CNOT$(A_i, A_{i-1})$
5: **for** $i = 0$ to $n - 1$ **do**
6:      Peres$(A_{i-1}, B_i, A_i)$
7: **for** $i = 0$ to $n$ **do**
8:      CNOT$(A_{i-1}, B_i)$

# FIG. 5a

# FIG. 5b

## Algorithm 1

**Require:** $|a\rangle_n\,|b\rangle_{n+1}\,|a_{-1}\rangle$ where $a,b \in [\![0, 2^n - 1]\!]$ and $|a_{-1}\rangle$ is an ancillary qubit initialized to 0.

**Ensure:** $|a\rangle_n\,|a + b\rangle_{n+1}\,|0\rangle$.

1: **for** $i = 0$ to $n - 1$ **do**
2:     $\mathrm{CNOT}(A_i, B_i)$

3: **for** $i = 0$ to $n - 1$ **do**
4:     $\mathrm{CNOT}(A_i, A_{i-1})$

5: **for** $i = 0$ to $n - 1$ **do**
6:     $\mathrm{Peres}(A_{i-1}, B_i, A_i)$

7: **for** $i = 0$ to $n$ **do**
8:     $\mathrm{CNOT}(A_{i-1}, B_i)$

9: **for** $i = n - 1$ to $0$ **do**
10:     $\mathrm{Peres}(A_{i-1}, B_i, A_i)$

11: **for** $i = n - 1$ to $0$ **do**
12:     $\mathrm{CNOT}(A_i, A_{i-1})$

13: **for** $i = 0$ to $n - 1$ **do**
14:     $\mathrm{CNOT}(A_i, B_i)$

# FIG. 5c

# FIG. 5d

FIG. 5e

---

**Algorithm 2**

---

**Require:** $|a\rangle_n |b\rangle_{n+1} |a_{-1}\rangle$ where $a, b \in [\![0, 2^n - 1]\!]$ and $|a_{-1}\rangle$ is an ancillary qubit initialized to 0.

1: **for** $i = 0$ to $n - 1$ **do**
2:      CNOT$(A_i, B_i)$
3: **for** $i = 0$ to $n - 1$ **do**
4:      CNOT$(A_i, A_{i-1})$
5: **for** $i = 0$ to $n - 1$ **do**
6:      Peres$(A_{i-1}, B_i, A_i)$
7: CNOT$(A_{n-1}, B_n)$

# FIG. 6a

# FIG. 6b

---

**Algorithm 2**

---

**Require:** $|a\rangle_n |b\rangle_{n+1} |a_{-1}\rangle$ where $a, b \in [\![0, 2^n - 1]\!]$ and $|a_{-1}\rangle$ is an ancillary qubit initialized to 0.

**Ensure:** $|a\rangle_n |a + b\rangle_{n+1} |0\rangle$.

1: **for** $i = 0$ to $n - 1$ **do**
2:    $\mathsf{CNOT}(A_i, B_i)$

3: **for** $i = 0$ to $n - 1$ **do**
4:    $\mathsf{CNOT}(A_i, A_{i-1})$

5: **for** $i = 0$ to $n - 1$ **do**
6:    $\mathsf{Peres}(A_{i-1}, B_i, A_i)$

7: $\mathsf{CNOT}(A_{n-1}, B_n)$
8: **for** $i = n - 1$ to $0$ **do**
9:    $\mathsf{Peres}(A_{i-1}, B_i, A_i)$
10:    $\mathsf{CNOT}(A_i, A_{i-1})$
11:    $\mathsf{CNOT}(A_{i-1}, B_i)$

---

# FIG. 6c

# FIG. 6d

**FIG. 6e**

$|0\rangle$   $|b_0\rangle$   $|a_0\rangle$   $|b_1\rangle$   $|a_1\rangle$   $|b_2\rangle$   $|a_2\rangle$   $|z \oplus (a \leq b)\rangle$

$|c_0 = 0\rangle$   $|b_0\rangle$   $|a_0\rangle$   $|b_1\rangle$   $|a_1\rangle$   $|b_2\rangle$   $|a_2\rangle$   $|z\rangle$

**FIG. 7**

FIG. 8

Europäisches
Patentamt
European
Patent Office
Office européen
des brevets

# EUROPEAN SEARCH REPORT

**Application Number**

EP 24 30 5167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HIMANSHU THAPLIYAL ET AL: "Design of Efficient Reversible Logic Based Binary and BCD Adder Circuits", ARXIV.ORG, CORNELL UNIVERSITY LIBRARY, 201 OLIN LIBRARY CORNELL UNIVERSITY ITHACA, NY 14853, 5 December 2017 (2017-12-05), XP080845605, DOI: 10.1145/2491682 * Sections 1, 5 * | 1-15 | INV. G06F7/544 G06N10/40 |
| A | SOMANI NEELAM ET AL: "Reversible adder design for ripple carry and carry look ahead (4, 8, 16, 32-bit)", 2016 INTERNATIONAL CONFERENCE ON COMPUTING, COMMUNICATION AND AUTOMATION (ICCCA), IEEE, 29 April 2016 (2016-04-29), pages 1387-1392, XP033039802, DOI: 10.1109/CCAA.2016.7813935 [retrieved on 2017-01-10] * Sections III, IV * | 1-15 | |
| A | STEVEN A CUCCARO ET AL: "A new quantum ripple-carry addition circuit", ARXIV.ORG, CORNELL UNIVERSITY LIBRARY, 201 OLIN LIBRARY CORNELL UNIVERSITY ITHACA, NY 14853, 22 October 2004 (2004-10-22), XP080171847, * Sections 2, 3, 4 * | 1-15 | **TECHNICAL FIELDS SEARCHED (IPC)** G06F G06N |

The present search report has been drawn up for all claims

| Place of search | Date of completion of the search | Examiner |
|---|---|---|
| Munich | 25 June 2024 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)